# EUROPEAN PATENT APPLICATION

(11) **EP 2 911 442 A1**
(43) Date of publication of application: **26.08.2015**
(21) Application number: 12888016.8
(22) Date of filing: 09.11.2012
(51) Int. Cl.: H04W 24/10

(54) **METHOD FOR UPLINK SOFTER HANDOVER, UE AND BASE STATION**

(71) Applicant: Huawei Technologies Co., Ltd., Longgang District Shenzhen, Guangdong 518129 (CN)
(72) Inventor: SHAO, Jiafeng, Shenzhen Guangdong 518129 (CN); WANG, Fan, Shenzhen Guangdong 518129 (CN); MA, Xueli, Shenzhen Guangdong 518129 (CN)
(74) Representative: Goddar, Heinz J.
(86) International application number: PCT/CN2012/084408
(87) International publication number: WO 2014/071620

(57) **Abstract**

Embodiments of the present invention relate to the communications field, and provide a method for an uplink softer handover and a user equipment, which can support an uplink softer handover in a cell forward access channel state, so as to improve performance of a user equipment located on an edge of a cell, and meanwhile increase processing efficiency of a base station. The method is: detecting signal quality or signal strength of an intra-frequency neighboring cell; if there is an intra-frequency neighboring cell whose signal quality or signal strength meets a first threshold, reporting, through a physical control channel or by using scheduling information, related information of the intra-frequency neighboring cell that meets the first threshold to a base station to which a user equipment belongs; then, configuring, by means of predefinition or a network, a repetition period for transmitting the related information of the intra-frequency neighboring cell, and repeatedly transmitting multiple pieces of same related information of the intra-frequency neighboring cell in the repetition period, so that the base station combines the multiple pieces of the same related information of the intra-frequency neighboring cell. In the embodiments of the present invention, an uplink softer handover is supported in the cell forward access channel state.

## Description

### TECHNICAL FIELD

The present invention relates to the communications field, and in particular, to a method for an uplink softer handover, a user equipment, and a base station.

### BACKGROUND

With rapid development of communications technologies, some "always on" services can be carried effectively in a CELL_FACH (CELL Forward Access Channel, cell forward access channel) state after HSPA (High-speed Packet Access, high speed packet access) transmission is implemented for uplink and downlink links that are in the CELL_FACH state. The "always on" services may be services that are connected by using a radio access network, such as Internet telephony (Voice over Internet Protocol, VoIP) and VPN (Virtual Private Network, virtual private network), and are characterized by frequent packet transmission and small data amount between a UE (User Equipment, user equipment) and a server. In this case, if a packet is carried in the CELL_FACH state, a use rate of network resources is low, and a quantity of users that a cell can support may also decrease.

In a current UMTS (Universal Mobile Telecommunications System, Universal Mobile Telecommunications System), amount of network data processing rapidly increases, and how to reduce a delay and improve transmission efficiency is an urgent problem to be resolved. Therefore, the CELL_FACH state needs to be further enhanced, so that a user equipment stays in the CELL_FACH state and can carry related services. Considering the foregoing reason, in release R11 (Release11, the 11th release) of WCDMA (Wideband Code Division Multiple Access, Wideband Code Division Multiple Access), multiple technologies, such as TTIA (Transmission Time Interval Alignment, transmission time interval alignment) and stand alone HS-DPCCH (stand alone High-Speed Dedicated Physical Control Channel, high-speed dedicated physical control channel), are introduced to enhance transmission performance in the CELL_FACH state. However, for the current standard, the CELL_FACH state does not support an uplink softer handover. In this case, when a UE, which is located on an edge of a cell, initiates random access to a NodeB (evolved NodeB), access performance of the UE is very poor. If the UE does not report, to the NodeB, in which intra-frequency neighboring cell of the UE a softer handover can be performed, the NodeB needs to perform blind detection on resources of multiple cells in real time. This not only reduces processing efficiency of the NodeB but also introduces redundant interference.

### SUMMARY

Embodiments of the present invention provide a method for an uplink softer handover, a user equipment, and a base station, which can support an uplink softer handover in a cell forward access channel state, thereby increasing processing efficiency of a base station while improving performance of a user equipment located on an edge of a cell.

To achieve the foregoing objective, the following technical solutions are used in the embodiments of the present invention:

According to a first aspect, a method for an uplink softer handover is provided, where the method includes:
detecting, by a user equipment, signal quality or signal strength of an intra-frequency neighboring cell; and
if there is an intra-frequency neighboring cell whose signal quality or signal strength meets a first threshold, reporting, through a physical control channel or by using scheduling information, related information of the intra-frequency neighboring cell that meets the first threshold to a base station to which the user equipment belongs.

In a first possible implementation manner, the related information of the intra-frequency neighboring cell includes:
an index of the intra-frequency neighboring cell, or indication information indicating that the intra-frequency neighboring cell supports a softer handover.

With reference to the first aspect or the first possible implementation manner of the first aspect, in a second possible implementation manner, before the reporting, through a physical control channel or by using scheduling information, related information of the intra-frequency neighboring cell to a base station to which the user equipment belongs, the method further includes:
receiving a mapping relationship, configured by a radio network controller, between the intra-frequency neighboring cell and the index of the intra-frequency neighboring cell; or
receiving a mapping relationship, configured by a radio network controller, between the intra-frequency neighboring cell and a transmission time unit in which the related information of the intra-frequency neighboring cell is transmitted.

With reference to the first aspect or the first possible implementation manner of the first aspect or the second possible implementation manner of the first aspect, in a third possible implementation manner, the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

With reference to the first aspect or the first possible implementation manner to the third possible implementation manner of the first aspect, in a fourth possible implementation manner, the first threshold includes a network-configured or predefined downlink pilot signal quality or signal strength threshold of an intra-frequency neighboring cell.

With reference to the first aspect or the first possible implementation manner to the fourth possible implementation manner of the first aspect, in a fifth possible implementation manner, the physical control channel includes an uplink dedicated physical control channel DPCCH, an uplink enhanced dedicated physical control channel E-DPCCH, or an uplink high-speed dedicated physical control channel HS-DPCCH.

With reference to the first aspect or the first possible implementation manner to the fifth possible implementation manner of the first aspect, in a sixth possible implementation manner, when the physical control channel is an uplink DPCCH, information about the physical control channel includes: pilot information, power control command word information, and the related information of the intra-frequency neighboring cell; and a manner in which the information about the physical control channel includes the related information of the intra-frequency neighboring cell includes:
explicitly including, by the uplink DPCCH, the related information of the intra-frequency neighboring cell directly: the related information of the intra-frequency neighboring cell is carried in a bit field for the related information of the intra-frequency neighboring cell; or
implicitly including, by the uplink DPCCH, the related information of the intra-frequency neighboring cell: a format of the uplink DPCCH includes a pilot bit field and a power control command word bit field, where if one of the pilot bit field and the power control command bit field is a network-configured value, it is determined that the other bit field carries the related information of the intra-frequency neighboring cell; and if both the pilot bit field and the power control command word bit field are predefined or network-configured values, a bit field except the pilot bit field and the power control command word bit field is used to carry the related information of the intra-frequency neighboring cell.

With reference to the first aspect or the first possible implementation manner to the sixth possible implementation manner of the first aspect, in a seventh possible implementation manner, the method includes:
when the related information of the intra-frequency neighboring cell is not reported, explicitly indicating, by using a predefined code point or 1-bit indication information in the bit field for the bit field for the related information of the intra-frequency neighboring cell, that the related information of the intra-frequency neighboring cell is not transmitted over the uplink DPCCH; or implicitly indicating, by using a non-predefined or non-network-configured value that is transmitted in the pilot bit field and/or the power control command word bit field, that the related information of the intra-frequency neighboring cell is not transmitted over the uplink DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the first aspect or the first possible implementation manner to the seventh possible implementation manner of the first aspect, in an eighth possible implementation manner, when the physical control channel is an uplink E-DPCCH, information about the physical control channel includes: an E-DPCCH transport format combination indicator, a retransmission sequence number or a new data indicator, happy bit information, and the related information of the intra-frequency neighboring cell; and
a manner in which the information about the physical control channel includes the related information of the intra-frequency neighboring cell includes:
explicitly including, by the uplink E-DPCCH, the related information of the intra-frequency neighboring cell directly: the related information of the intra-frequency neighboring cell is carried in a bit for the related information of the intra-frequency neighboring cell; or
implicitly including, by the uplink E-DPCCH, the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

With reference to the first aspect or the first possible implementation manner to the eighth possible implementation manner of the first aspect, in a ninth possible implementation manner, the method includes:
when the related information of the intra-frequency neighboring cell is not reported, explicitly indicating, by using a predefined code point or 1-bit indication information in the bit field for the related information of the intra-frequency neighboring cell, that the related information of the intra-frequency neighboring cell is not transmitted over the uplink E-DPCCH; or implicitly indicating, by using a non-predefined or non-network-configured value that is transmitted in a bit field for the E-DPCCH transmission format combination indicator, that the related information of the intra-frequency neighboring cell is not transmitted over the uplink E-DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the first aspect or the first possible implementation manner to the ninth possible implementation manner of the first aspect, in a tenth possible implementation manner, when the physical control channel is an uplink E-DPCCH and the information about the physical control channel includes the new data indicator, the new data indicator is 1-bit information.

With reference to the first aspect or the first possible implementation manner to the tenth possible implementation manner of the first aspect, in an eleventh possible implementation manner, when the physical control channel is an uplink HS-DPCCH, information about the physical control channel includes an acknowledgment or a negative acknowledgment, channel quality information and/or precoding control information, and the related information of the intra-frequency neighboring cell; and
a manner in which the information about the physical control channel includes the related information of the intra-frequency neighboring cell includes:
performing joint coding on the related information of the intra-frequency neighboring cell and the channel quality information and/or the precoding control information to form new 20-bit information.

With reference to the first aspect or the first possible implementation manner to the eleventh possible implementation manner of the first aspect, in a twelfth possible implementation manner, the method includes:
when the related information of the intra-frequency neighboring cell is not reported, indicating, by using a predefined code point in the bit field for the related information of the intra-frequency neighboring cell, that the related information of the intra-frequency neighboring cell is not transmitted over the uplink HS-DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the first aspect or the first possible implementation manner to the twelfth possible implementation manner of the first aspect, in a thirteenth possible implementation manner, the scheduling information includes the related information of the intra-frequency neighboring cell and a highest priority logical channel identifier; and
the reporting, by using scheduling information, related information of the intra-frequency neighboring cell to a base station to which the user equipment belongs includes:
transmitting, by using one or several bit fields of a total E-DCH buffer status bit field, a highest priority logical channel buffer status bit field, and a UE power headroom bit field, the related information of the intra-frequency neighboring cell, where a highest priority logical channel identifier bit field is equal to a predefined or network-configured value.

With reference to the first aspect or the first possible implementation manner to the thirteenth possible implementation manner of the first aspect, in a fourteenth possible implementation manner, the method further includes:
configuring, by means of predefinition or a network, a repetition period for transmitting the related information of the intra-frequency neighboring cell, and repeatedly transmitting multiple pieces of same related information of the intra-frequency neighboring cell in the repetition period, so that the base station combines the multiple pieces of the same related information of the intra-frequency neighboring cell.

According to a second aspect, a method for an uplink softer handover is provided, including:
receiving, by a base station, related information of an intra-frequency neighboring cell, where the related information of the intra-frequency neighboring cell is reported by a user equipment through a physical control channel or by using scheduling information;
acquiring, according to the related information of the intra-frequency neighboring cell, an intra-frequency neighboring cell in which a softer handover can be performed; and
combining uplink transmission of the user equipment that is received by a serving cell in which the user equipment is located and uplink transmission of the user equipment that is received by an intra-frequency neighboring cell of the serving cell in which the user equipment is located.

With reference to the second aspect, in a first possible implementation manner, the related information of the intra-frequency neighboring cell includes:
an index of the intra-frequency neighboring cell, or indication information indicating that the intra-frequency neighboring cell supports a softer handover.

With reference to the second aspect or the first possible implementation manner of the second aspect, in a second possible implementation manner, before the acquiring, according to the related information of the intra-frequency neighboring cell, an intra-frequency neighboring cell in which a softer handover can be performed, the method further includes:
receiving a mapping relationship, configured by a radio network controller, between the intra-frequency neighboring cell and the index of the intra-frequency neighboring cell; or
receiving a mapping relationship, configured by a radio network controller, between the intra-frequency neighboring cell and a transmission time unit in which the related information of the intra-frequency neighboring cell is transmitted.

With reference to the second aspect or the first possible implementation manner of the second aspect or the second possible implementation manner of the second aspect, in a third possible implementation manner, the index of the intra-frequency neighboring cell is determined according to the mapping relationship, configured by the radio network controller, between the infra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

With reference to the second aspect or the first possible implementation manner to the third possible implementation manner of the second aspect, in a fourth possible implementation manner, the physical control channel that receives the user equipment includes an uplink dedicated physical control channel DPCCH, an uplink enhanced dedicated physical control channel E-DPCCH, or an uplink high-speed dedicated physical control channel HS-DPCCH.

With reference to the second aspect or the first possible implementation manner to the fourth possible implementation manner of the second aspect, in a fifth possible implementation manner, when the physical control channel is an uplink DPCCH, information about the physical control channel includes: a pilot, a power control command word, and the related information of the intra-frequency neighboring cell; and
a manner in which the information about the physical control channel includes the related information of the intra-frequency neighboring cell includes:
explicitly including, by the uplink DPCCH, the related information of the intra-frequency neighboring cell directly: the related information of the intra-frequency neighboring cell is carried in a bit field for the related information of the intra-frequency neighboring cell; or
implicitly including, by the uplink DPCCH, the related information of the intra-frequency neighboring cell: the uplink DPCCH includes a pilot bit field and a power control command word bit field, where if one bit field of the pilot bit field and the power control command bit field is a network-configured value or a predefined value, it is determined that the other bit field carries the related information of the intra-frequency neighboring cell; and if both the pilot bit field and the power control command word bit field are network-configured values or predefined values, a bit field except the pilot bit field and the power control command word bit field is used to carry the related information of the intra-frequency neighboring cell.

With reference to the second aspect or the first possible implementation manner to the fifth possible implementation manner of the second aspect, in a sixth possible implementation manner, the method includes:
if a fixed code point or 1bit in the bit field for the related information of the intra-frequency neighboring cell is received, explicitly indicating that the related information of the intra-frequency neighboring cell is not transmitted over the uplink DPCCH; or if a non-predefined or non-network-configured value that is transmitted in the pilot bit field and/or the power control command word bit field is received, implicitly indicating that the related information of the intra-frequency neighboring cell is not transmitted over the uplink DPCCH; where
if there is an intra-frequency neighboring cell whose signal quality or signal strength does not meet a first threshold, or if a base station to which the user equipment belongs has already received the related information of the intra-frequency neighboring cell that meets the first threshold, the base station to which the user equipment belongs does not receive the related information of the intra-frequency neighboring cell.

With reference to the second aspect or the first possible implementation manner to the sixth possible implementation manner of the second aspect, in a seventh possible implementation manner, when the physical control channel is an uplink E-DPCCH, information about the physical control channel includes: an E-DPCCH transport format combination indicator, a retransmission sequence number or a new data indicator, happy bit information, and the related information of the intra-frequency neighboring cell; and
a manner in which the information about the physical control channel includes the related information of the intra-frequency neighboring cell includes:
explicitly including, by the uplink E-DPCCH, the related information of the intra-frequency neighboring cell directly: the related information of the intra-frequency neighboring cell is carried in a bit for the related information of the intra-frequency neighboring cell; or
implicitly including, by the uplink E-DPCCH, the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

With reference to the second aspect or the first possible implementation manner to the seventh possible implementation manner of the second aspect, in an eighth possible implementation manner, the method includes:
if a predefined code point or 1-bit indication information in the bit field for the related information of the intra-frequency neighboring cell is received, explicitly learning that the related information of the intra-frequency neighboring cell is not transmitted over the uplink E-DPCCH; or if a non-predefined or non-network-configured value that is transmitted in the E-DPCCH transport format combination indicator bit field is received, implicitly learning that the related information of the intra-frequency neighboring cell is not transmitted over the uplink E-DPCCH; where
if there is an intra-frequency neighboring cell whose signal quality or signal strength does not meet a first threshold, or if a base station to which the user equipment belongs has already received the related information of the intra-frequency neighboring cell that meets the first threshold, the base station to which the user equipment belongs does not receive the related information of the intra-frequency neighboring cell.

With reference to the second aspect or the first possible implementation manner to the eighth possible implementation manner of the second aspect, in a ninth possible implementation manner, when the physical control channel is an uplink E-DPCCH and the information about the physical control channel includes the new data indicator, the new data indicator is 1-bit information.

With reference to the second aspect or the first possible implementation manner to the ninth possible implementation manner of the second aspect, in a tenth possible implementation manner, when the physical control channel is an uplink HS-DPCCH, information about the physical control channel includes: an acknowledgment or a negative acknowledgment, channel quality information and/or precoding control information, and the related information of the intra-frequency neighboring cell; and
a manner in which the information about the physical control channel includes the related information of the intra-frequency neighboring cell includes:
performing joint coding on the related information of the intra-frequency neighboring cell and the channel quality information and/or the precoding control information to form new 20-bit information.

With reference to the second aspect or the first possible implementation manner to the tenth possible implementation manner of the second aspect, in an eleventh possible implementation manner, the method includes:
if a predefined code point in the bit field for the related information of the intra-frequency neighboring cell is received, learning, by using the code point, that the related information of the intra-frequency neighboring cell is not transmitted over the uplink HS-DPCCH; where
if there is an intra-frequency neighboring cell whose signal quality or signal strength does not meet a first threshold, or if the base station to which the user equipment belongs has already received the related information of the intra-frequency neighboring cell that meets the first threshold, the base station to which the user equipment belongs does not receive the related information of the intra-frequency neighboring cell.

With reference to the second aspect or the first possible implementation manner to the eleventh possible implementation manner of the second aspect, in a twelfth possible implementation manner, the scheduling information includes the related information of the intra-frequency neighboring cell and a highest priority logical channel identifier; and
the receiving related information of an intra-frequency neighboring cell, where the related information of the intra-frequency neighboring cell is reported by a user equipment by using scheduling information includes:
   when a highest priority logical channel identifier bit field in the received scheduling information is equal to a predefined or network-configured value, learning, by using one or several bit fields of a total E-DCH buffer status bit field, a highest priority logical channel buffer status bit field, and a UE power headroom bit field that are in the scheduling information, the related information of the intra-frequency neighboring cell.

With reference to the second aspect or the first possible implementation manner to the twelfth possible implementation manner of the second aspect, in a thirteenth possible implementation manner, the method further includes:
configuring, by means of predefinition or a network, a repetition period for transmitting the related information of the intra-frequency neighboring cell, receiving multiple pieces of same related information of the intra-frequency neighboring cell in the repetition period, and combining the multiple pieces of the same related information of the intra-frequency neighboring cell.

According to a third aspect, a user equipment is provided, including:
a detecting unit, configured for the user equipment to detect signal quality or signal strength of an intra-frequency neighboring cell and send the signal quality or signal strength of the intra-frequency neighboring cell to an information reporting unit; and
the information reporting unit, configured to receive the signal quality or signal strength of the intra-frequency neighboring cell from the detecting unit, and if there is an intra-frequency neighboring cell whose signal quality or signal strength meets a first threshold, report, through a physical control channel or by using scheduling information, related information of the intra-frequency neighboring cell that meets the first threshold to a base station to which the user equipment belongs.

With reference to the third aspect, in a first possible implementation manner, the related information of the intra-frequency neighboring cell includes:
an index of the intra-frequency neighboring cell, or indication information indicating that the intra-frequency neighboring cell supports a softer handover.

With reference to the third aspect or the first possible implementation manner of the third aspect, in a second possible implementation manner, before the information reporting unit reports, through the physical control channel or by using the scheduling information, the related information of the intra-frequency neighboring cell to the base station to which the user equipment belongs, the information reporting unit is further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

With reference to the third aspect or the first possible implementation manner of the third aspect or the second possible implementation manner of the third aspect, in a third possible implementation manner, the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

With reference to the third aspect or the first possible implementation manner to the third possible implementation manner of the third aspect, in a fourth possible implementation manner, the first threshold includes a network-configured or predefined downlink pilot signal quality or signal strength threshold of an intra-frequency neighboring cell.

With reference to the third aspect or the first possible implementation manner to the fourth possible implementation manner of the third aspect, in a fifth possible implementation manner, the physical control channel includes an uplink dedicated physical control channel DPCCH, an uplink enhanced dedicated physical control channel E-DPCCH, or an uplink high-speed dedicated physical control channel HS-DPCCH.

With reference to the third aspect or the first possible implementation manner to the fifth possible implementation manner of the third aspect, in a sixth possible implementation manner, when the physical control channel is an uplink DPCCH, information about the physical control channel includes: pilot information, power control command word information, and the related information of the intra-frequency neighboring cell; and
the information reporting unit is specifically configured to:
the uplink DPCCH explicitly includes the related information of the intra-frequency neighboring cell directly: the related information of the intra-frequency neighboring cell is carried in a bit field for the related information of the intra-frequency neighboring cell; or
the uplink DPCCH implicitly includes the related information of the intra-frequency neighboring cell: a format of the uplink DPCCH includes a pilot bit field and a power control command word bit field, where if one of the pilot bit field and the power control command bit field is a network-configured value, it is determined that the other bit field carries the related information of the intra-frequency neighboring cell; and if both the pilot bit field and the power control command word bit field are predefined or network-configured values, a bit field except the pilot bit field and the power control command word bit field is used to carry the related information of the intra-frequency neighboring cell.

With reference to the third aspect or the first possible implementation manner to the sixth possible implementation manner of the third aspect, in a seventh possible implementation manner, the information reporting unit includes:
an indicating unit, configured to, when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink DPCCH; or implicitly indicate, by using a non-predefined or non-network-configured value that is transmitted in the pilot bit field and/or the power control command word bit field, that the related information of the intra-frequency neighboring cell is not transmitted over the uplink DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the third aspect or the first possible implementation manner to the seventh possible implementation manner of the third aspect, in an eighth possible implementation manner, when information about the physical control channel includes the related information of the intra-frequency neighboring cell and the physical control channel is an uplink E-DPCCH, the information about the physical control channel includes: an E-DPCCH transport format combination indicator, a retransmission sequence number or a new data indicator, happy bit information, and the related information of the intra-frequency neighboring cell; and
the information reporting unit is specifically configured to:
the uplink E-DPCCH explicitly includes the related information of the intra-frequency neighboring cell directly: the related information of the intra-frequency neighboring cell is carried in a bit for the related information of the intra-frequency neighboring cell; or
the uplink E-DPCCH implicitly includes the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

With reference to the third aspect or the first possible implementation manner to the eighth possible implementation manner of the third aspect, in a ninth possible implementation manner, the user equipment includes:
the indicating unit, further configured to, when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink E-DPCCH; or implicitly indicate, by using a non-predefined or non-network-configured value that is transmitted in a bit field for the E-DPCCH transmission format combination indicator, that the related information of the intra-frequency neighboring cell is not transmitted over the uplink E-DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the third aspect or the first possible implementation manner to the ninth possible implementation manner of the third aspect, in a tenth possible implementation manner, when the physical control channel is an uplink E-DPCCH and the information about the physical control channel includes the new data indicator, the new data indicator is 1-bit information.

With reference to the third aspect or the first possible implementation manner to the tenth possible implementation manner of the third aspect, in an eleventh possible implementation manner, when the physical control channel is an uplink HS-DPCCH, information about the physical control channel includes: an acknowledgment or a negative acknowledgment, channel quality information and/or precoding control information, and the related information of the intra-frequency neighboring cell; and
the information reporting unit further includes:
a coding unit, configured to perform joint coding on the related information of the intra-frequency neighboring cell and the channel quality information and/or the precoding control information to form new 20-bit information.

With reference to the third aspect or the first possible implementation manner to the eleventh possible implementation manner of the third aspect, in a twelfth possible implementation manner, the user equipment includes:
the indicating unit, further configured to, when the related information of the intra-frequency neighboring cell is not reported, indicate, by using a predefined code point in the bit field for the related information of the intra-frequency neighboring cell, that the related information of the intra-frequency neighboring cell is not transmitted over the uplink HS-DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the third aspect or the first possible implementation manner to the twelfth possible implementation manner of the third aspect, in a thirteenth possible implementation manner, the scheduling information includes: the related information of the intra-frequency neighboring cell and a highest priority logical channel identifier; and
the information reporting unit is specifically configured to:
   transmit, by using one or several bit fields of a total E-DCH buffer status bit field, a highest priority logical channel buffer status bit field, and a UE power headroom bit field, the related information of the intra-frequency neighboring cell, where a highest priority logical channel identifier bit field is equal to a predefined or network-configured value.

With reference to the third aspect or the first possible implementation manner to the thirteenth possible implementation manner of the third aspect, in a fourteenth possible implementation manner, the user equipment further includes:
a repeated transmission unit, configured to configure, by means of predefinition or a network, a repetition period for transmitting the related information of the intra-frequency neighboring cell, and repeatedly transmit multiple pieces of same related information of the intra-frequency neighboring cell in the repetition period, so that the base station combines the multiple pieces of the same related information of the intra-frequency neighboring cell.

According to a fourth aspect, a base station is provided, including:
a receiving unit, configured for the base station to receive related information of an intra-frequency neighboring cell, where the related information of the intra-frequency neighboring cell is reported by a user equipment through a physical control channel or by using scheduling information;
an acquiring unit, configured to acquire, according to the related information of the intra-frequency neighboring cell, an intra-frequency neighboring cell in which a softer handover can be performed; and
a data combining unit, configured to combine uplink transmission of the user equipment that is received by a serving cell in which the user equipment is located and uplink transmission of the user equipment that is received by an intra-frequency neighboring cell of the serving cell in which the user equipment is located.

With reference to the fourth aspect, in a first possible implementation manner, the related information of the intra-frequency neighboring cell includes:
an index of the intra-frequency neighboring cell, or indication information indicating that the intra-frequency neighboring cell supports a softer handover.

With reference to the fourth aspect or the first manner of the fourth aspect, in a second possible implementation manner, before the intra-frequency neighboring cell in which a softer handover can be performed is acquired according to the related information of the intra-frequency neighboring cell, the receiving unit is further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

With reference to the fourth aspect or the first manner of the fourth aspect or the second possible implementation manner of the fourth aspect, in a third possible implementation manner, the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

With reference to the fourth aspect or the first manner to the third possible implementation manner of the fourth aspect, in a fourth possible implementation manner, the physical control channel that receives the user equipment includes an uplink dedicated physical control channel DPCCH, an uplink enhanced dedicated physical control channel E-DPCCH, or an uplink high-speed dedicated physical control channel HS-DPCCH.

With reference to the fourth aspect or the first manner to the fourth possible implementation manner of the fourth aspect, in a fifth possible implementation manner, when the physical control channel is an uplink DPCCH, information about the physical control channel includes: a pilot, a power control command word, and the related information of the intra-frequency neighboring cell; and
the receiving unit is specifically configured to:
the uplink DPCCH explicitly includes the related information of the intra-frequency neighboring cell directly: the related information of the intra-frequency neighboring cell is carried in a bit field for the related information of the intra-frequency neighboring cell; or
the uplink DPCCH implicitly includes the related information of the intra-frequency neighboring cell: the uplink DPCCH includes a pilot bit field and a power control command word bit field, where if one bit field of the pilot bit field and the power control command bit field is a network-configured value or a predefined value, it is determined that the other bit field carries the related information of the intra-frequency neighboring cell; and if both the pilot bit field and the power control command word bit field are network-configured values or predefined values, a bit field except the pilot bit field and the power control command word bit field is used to carry the related information of the intra-frequency neighboring cell.

With reference to the fourth aspect or the first manner to the fifth possible implementation manner of the fourth aspect, in a sixth possible implementation manner, the receiving unit is further configured to:
if a predefined code point or 1-bit indication information in the bit field for the related information of the intra-frequency neighboring cell is received, explicitly learn that the related information of the intra-frequency neighboring cell is not transmitted over the uplink DPCCH; or if a non-predefined or non-network-configured value that is transmitted in the pilot bit field and/or the power control command word bit field is received, implicitly learn that the related information of the intra-frequency neighboring cell is not transmitted over the uplink DPCCH; where
if there is an intra-frequency neighboring cell whose signal quality or signal strength does not meet a first threshold, or if a base station to which the user equipment belongs has already received the related information of the intra-frequency neighboring cell that meets the first threshold, the base station to which the user equipment belongs does not receive the related information of the intra-frequency neighboring cell.

With reference to the fourth aspect or the first manner to the sixth possible implementation manner of the fourth aspect, in a seventh possible implementation manner, when the physical control channel is an uplink E-DPCCH, information about the physical control channel includes: an E-DPCCH transport format combination indicator, a retransmission sequence number or a new data indicator, happy bit information, and the related information of the intra-frequency neighboring cell; and
the receiving unit is specifically configured to:
the uplink E-DPCCH explicitly includes the related information of the intra-frequency neighboring cell directly: the related information of the intra-frequency neighboring cell is carried in a bit for the related information of the intra-frequency neighboring cell; or
the uplink E-DPCCH implicitly includes the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

With reference to the fourth aspect or the first manner to the seventh possible implementation manner of the fourth aspect, in an eighth possible implementation manner, the receiving unit is further configured to:
if a predefined code point or 1-bit indication information in the bit field for the related information of the intra-frequency neighboring cell is received, explicitly learn that the related information of the intra-frequency neighboring cell is not transmitted over the uplink E-DPCCH; or if a non-predefined or non-network-configured value that is transmitted in the E-DPCCH transport format combination indicator bit field is received, implicitly learn that the related information of the intra-frequency neighboring cell is not transmitted over the uplink E-DPCCH; where
if there is an intra-frequency neighboring cell whose signal quality or signal strength does not meet the first threshold, or if the base station to which the user equipment belongs has already received the related information of the intra-frequency neighboring cell that meets the first threshold, the base station to which the user equipment belongs does not receive the related information of the intra-frequency neighboring cell.

With reference to the fourth aspect or the first manner to the eighth possible implementation manner of the fourth aspect, in a ninth possible implementation manner, when the physical control channel is an uplink E-DPCCH and the information about the physical control channel includes the new data indicator, the new data indicator is 1-bit information.

With reference to the fourth aspect or the first manner to the ninth possible implementation manner of the fourth aspect, in a tenth possible implementation manner, when the physical control channel is an uplink HS-DPCCH, information about the physical control channel includes: an acknowledgment or a negative acknowledgment, channel quality information and/or precoding control information, and the related information of the intra-frequency neighboring cell; and
a manner in which the information about the physical control channel includes the related information of the intra-frequency neighboring cell includes:
performing joint coding on the related information of the intra-frequency neighboring cell and the channel quality information and/or the precoding control information to form new 20-bit information.

With reference to the fourth aspect or the first manner to the tenth possible implementation manner of the fourth aspect, in an eleventh possible implementation manner, the receiving unit is configured to:
if a predefined code point in the bit field for the related information of the intra-frequency neighboring cell is received, learn, by using the code point, that the related information of the intra-frequency neighboring cell is not transmitted over the uplink HS-DPCCH; where
if there is an intra-frequency neighboring cell whose signal quality or signal strength does not meet the first threshold, or if the base station to which the user equipment belongs has already received the related information of the intra-frequency neighboring cell that meets the first threshold, the base station to which the user equipment belongs does not receive the related information of the intra-frequency neighboring cell.

With reference to the fourth aspect or the first manner to the eleventh possible implementation manner of the fourth aspect, in a twelfth possible implementation manner, the scheduling information includes the related information of the intra-frequency neighboring cell and a highest priority logical channel identifier; and
the receiving unit is configured to:
when a highest priority logical channel identifier bit field in the received scheduling information is equal to a predefined or network-configured value, learn, by using one or several bit fields of a total E-DCH buffer status bit field, a highest priority logical channel buffer status bit field, and a UE power headroom bit field that are in the scheduling information, the related information of the intra-frequency neighboring cell.

With reference to the fourth aspect or the first manner to the twelfth possible implementation manner of the fourth aspect, in a thirteenth possible implementation manner, the base station further includes:
configure, by means of predefinition or a network, a repetition period for transmitting the related information of the intra-frequency neighboring cell, receive multiple pieces of same related information of the intra-frequency neighboring cell in the repetition period, and combine the multiple pieces of the same related information of the intra-frequency neighboring cell.

According to a fifth aspect, a user equipment is provided, including:
a first processor, configured for the user equipment to detect signal quality or signal strength of an intra-frequency neighboring cell and send the signal quality or signal strength of the intra-frequency neighboring cell to a first transmitter; and
the first transmitter, configured to receive the signal quality or signal strength of the intra-frequency neighboring cell from the first processor, and if there is an intra-frequency neighboring cell whose signal quality or signal strength meets a first threshold, report, through a physical control channel or by using scheduling information, related information of the intra-frequency neighboring cell that meets the first threshold to a base station to which the user equipment belongs.

With reference to the fifth aspect, in a first possible implementation manner, the related information of the intra-frequency neighboring cell includes:
an index of the intra-frequency neighboring cell, or indication information indicating that the intra-frequency neighboring cell supports a softer handover.

With reference to the fifth aspect or the first possible implementation manner of the fifth aspect, in a second possible implementation manner, the user equipment further includes:
a first receiver, configured to, before the related information of the intra-frequency neighboring cell is reported, through the physical control channel or by using the scheduling information, to the base station to which the user equipment belongs,
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

With reference to the fifth aspect or the first possible implementation manner of the fifth aspect or the second possible implementation manner of the fifth aspect, in a third possible implementation manner, the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

With reference to the fifth aspect or the first possible implementation manner to the third possible implementation manner of the fifth aspect, in a fourth possible implementation manner, the first threshold includes a network-configured or predefined downlink pilot signal quality or signal strength threshold of an intra-frequency neighboring cell.

With reference to the fifth aspect or the first possible implementation manner to the fourth possible implementation manner of the fifth aspect, in a fifth possible implementation manner, the physical control channel includes an uplink dedicated physical control channel DPCCH, an uplink enhanced dedicated physical control channel E-DPCCH, or an uplink high-speed dedicated physical control channel HS-DPCCH.

With reference to the fifth aspect or the first possible implementation manner to the fifth possible implementation manner of the fifth aspect, in a sixth possible implementation manner, when the physical control channel is an uplink DPCCH, information about the physical control channel includes: pilot information, power control command word information, and the related information of the intra-frequency neighboring cell; and
the first transmitter is specifically configured to:
the uplink DPCCH explicitly includes the related information of the intra-frequency neighboring cell directly: the related information of the intra-frequency neighboring cell is carried in a bit field for the related information of the intra-frequency neighboring cell; or
the uplink DPCCH implicitly includes the related information of the intra-frequency neighboring cell: a format of the uplink DPCCH includes a pilot bit field and a power control command word bit field, where if one of the pilot bit field and the power control command bit field is a network-configured value, it is determined that the other bit field carries the related information of the intra-frequency neighboring cell; and if both the pilot bit field and the power control command word bit field are predefined or network-configured values, a bit field except the pilot bit field and the power control command word bit field is used to carry the related information of the intra-frequency neighboring cell.

With reference to the fifth aspect or the first possible implementation manner to the sixth possible implementation manner of the fifth aspect, in a seventh possible implementation manner, the first transmitter is further configured to:
when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink DPCCH; or implicitly indicate, by using a non-predefined or non-network-configured value that is transmitted in the pilot bit field and/or the power control command word bit field, that the related information of the intra-frequency neighboring cell is not transmitted over the uplink DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the fifth aspect or the first possible implementation manner to the seventh possible implementation manner of the fifth aspect, in an eighth possible implementation manner, when information about the physical control channel includes the related information of the intra-frequency neighboring cell and the physical control channel is an uplink E-DPCCH, the information about the physical control channel includes: an E-DPCCH transport format combination indicator, a retransmission sequence number or a new data indicator, happy bit information, and the related information of the intra-frequency neighboring cell; and
the first transmitter is specifically configured to:
the uplink E-DPCCH explicitly includes the related information of the intra-frequency neighboring cell directly: the related information of the intra-frequency neighboring cell is carried in a bit for the related information of the intra-frequency neighboring cell; or
the uplink E-DPCCH implicitly includes the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

With reference to the fifth aspect or the first possible implementation manner to the eighth possible implementation manner of the fifth aspect, in a ninth possible implementation manner, the first transmitter is further configured to:
when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink E-DPCCH; or implicitly indicate, by using a non-predefined or non-network-configured value that is transmitted in a bit field for the E-DPCCH transmission format combination indicator, that the related information of the intra-frequency neighboring cell is not transmitted over the uplink E-DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the fifth aspect or the first possible implementation manner to the ninth possible implementation manner of the fifth aspect, in a tenth possible implementation manner, when the physical control channel is an uplink E-DPCCH and the information about the physical control channel includes the new data indicator, the new data indicator is 1-bit information.

With reference to the fifth aspect or the first possible implementation manner to the tenth possible implementation manner of the fifth aspect, in an eleventh possible implementation manner, when the physical control channel is an uplink HS-DPCCH, information about the physical control channel includes an acknowledgment or a negative acknowledgment, channel quality information and/or precoding control information, and the related information of the intra-frequency neighboring cell; and
the first transmitter is specifically configured to:
perform joint coding on the related information of the intra-frequency neighboring cell and the channel quality information and/or the precoding control information to form new 20-bit information.

With reference to the fifth aspect or the first possible implementation manner to the eleventh possible implementation manner of the fifth aspect, in a twelfth possible implementation manner, the first transmitter is further configured to:
when the related information of the intra-frequency neighboring cell is not reported, indicate, by using a predefined code point in the bit field for the related information of the intra-frequency neighboring cell, that the related information of the intra-frequency neighboring cell is not transmitted over the uplink HS-DPCCH; where
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

With reference to the fifth aspect or the first possible implementation manner to the twelfth possible implementation manner of the fifth aspect, in a thirteenth possible implementation manner, the scheduling information includes: the related information of the intra-frequency neighboring cell and a highest priority logical channel identifier; and
the first transmitter is specifically configured to:
transmit, by using one or several bit fields of a total E-DCH buffer status bit field, a highest priority logical channel buffer status bit field, and a UE power headroom bit field, the related information of the intra-frequency neighboring cell, where a highest priority logical channel identifier bit field is equal to a predefined or network-configured value.

With reference to the fifth aspect or the first possible implementation manner to the thirteenth possible implementation manner of the fifth aspect, in a fourteenth possible implementation manner, the first transmitter further includes:
configure, by means of predefinition or a network, a repetition period for transmitting the related information of the intra-frequency neighboring cell, and repeatedly transmit multiple pieces of same related information of the intra-frequency neighboring cell in the repetition period, so that the base station combines the multiple pieces of the same related information of the intra-frequency neighboring cell.

According to a sixth aspect, a base station is provided, including:
a second receiver, configured for the base station to receive related information of an intra-frequency neighboring cell, where the related information of the intra-frequency neighboring cell is reported by a user equipment through a physical control channel or by using scheduling information; and
a second processor, configured to acquire, according to the related information of the intra-frequency neighboring cell, an intra-frequency neighboring cell in which a softer handover can be performed; where
the second processor is further configured to combine uplink transmission of the user equipment that is received by a serving cell in which the user equipment is located and uplink transmission of the user equipment that is received by an intra-frequency neighboring cell of the serving cell in which the user equipment is located.

With reference to the sixth aspect, in a first possible implementation manner, the related information of the intra-frequency neighboring cell includes:
an index of the intra-frequency neighboring cell, or indication information indicating that the intra-frequency neighboring cell supports a softer handover.

With reference to the sixth aspect or the first possible implementation manner of the sixth aspect, in a second possible implementation manner, before the intra-frequency neighboring cell in which a softer handover can be performed is acquired according to the related information of the intra-frequency neighboring cell, the second receiver is further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

With reference to the sixth aspect or the first possible implementation manner of the sixth aspect or the second possible implementation manner of the sixth aspect, in a third possible implementation manner, the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

With reference to the sixth aspect or the first possible implementation manner to the third possible implementation manner of the sixth aspect, in a fourth possible implementation manner, the physical control channel that receives the user equipment includes an uplink dedicated physical control channel DPCCH, an uplink enhanced dedicated physical control channel E-DPCCH, or an uplink high-speed dedicated physical control channel HS-DPCCH.

With reference to the sixth aspect or the first possible implementation manner to the fourth possible implementation manner of the sixth aspect, in a fifth possible implementation manner, when the physical control channel is an uplink DPCCH, information about the physical control channel includes: a pilot, a power control command word, and the related information of the intra-frequency neighboring cell; and
the second receiver is specifically configured to:
the uplink DPCCH explicitly includes the related information of the intra-frequency neighboring cell directly: the related information of the intra-frequency neighboring cell is carried in a bit field for the related information of the intra-frequency neighboring cell; or
the uplink DPCCH implicitly includes the related information of the intra-frequency neighboring cell: the uplink DPCCH includes a pilot bit field and a power control command word bit field, where if one bit field of the pilot bit field and the power control command bit field is a network-configured value or a predefined value, it is determined that the other bit field carries the related information of the intra-frequency neighboring cell; and if both the pilot bit field and the power control command word bit field are network-configured values or predefined values, a bit field except the pilot bit field and the power control command word bit field is used to carry the related information of the intra-frequency neighboring cell.

With reference to the sixth aspect or the first possible implementation manner to the fifth possible implementation manner of the sixth aspect, in a sixth possible implementation manner, the second receiver is further configured to:
if a predefined code point or 1-bit indication information in the bit field for the related information of the intra-frequency neighboring cell is received, explicitly learn that the related information of the intra-frequency neighboring cell is not transmitted over the uplink DPCCH; or if a non-predefined or non-network-configured value that is transmitted in the pilot bit field and/or the power control command word bit field is received, implicitly learn that the related information of the intra-frequency neighboring cell is not transmitted over the uplink DPCCH; where
if there is an intra-frequency neighboring cell whose signal quality or signal strength does not meet a first threshold, or if a base station to which the user equipment belongs has already received the related information of the intra-frequency neighboring cell that meets the first threshold, the base station to which the user equipment belongs does not receive the related information of the intra-frequency neighboring cell.

With reference to the sixth aspect or the first possible implementation manner to the sixth possible implementation manner of the sixth aspect, in a seventh possible implementation manner, when the physical control channel is an uplink E-DPCCH, information about the physical control channel includes: an E-DPCCH transport format combination indicator, a retransmission sequence number or a new data indicator, happy bit information, and the related information of the intra-frequency neighboring cell; and
the second receiver is specifically configured to:
the uplink E-DPCCH explicitly includes the related information of the intra-frequency neighboring cell directly: the related information of the intra-frequency neighboring cell is carried in a bit for the related information of the intra-frequency neighboring cell; or
the uplink E-DPCCH implicitly includes the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

With reference to the sixth aspect or the first possible implementation manner to the seventh possible implementation manner of the sixth aspect, in an eighth possible implementation manner, the second receiver is further configured to:
if a predefined code point or 1-bit indication information in the bit field for the related information of the intra-frequency neighboring cell is received, explicitly learn that the related information of the intra-frequency neighboring cell is not transmitted over the uplink E-DPCCH; or if a non-predefined or non-network-configured value that is transmitted in the E-DPCCH transport format combination indicator bit field is received, implicitly learn that the related information of the intra-frequency neighboring cell is not transmitted over the uplink E-DPCCH; where
if there is an intra-frequency neighboring cell whose signal quality or signal strength does not meet the first threshold, or if the base station to which the user equipment belongs has already received the related information of the intra-frequency neighboring cell that meets the first threshold, the base station to which the user equipment belongs does not receive the related information of the intra-frequency neighboring cell.

With reference to the sixth aspect or the first possible implementation manner to the eighth possible implementation manner of the sixth aspect, in a ninth possible implementation manner, when the physical control channel is an uplink E-DPCCH and the information about the physical control channel includes the new data indicator, the new data indicator is 1-bit information.

With reference to the sixth aspect or the first possible implementation manner to the ninth possible implementation manner of the sixth aspect, in a tenth possible implementation manner, when the physical control channel is an uplink HS-DPCCH, information about the physical control channel includes an acknowledgment or a negative acknowledgment, channel quality information and/or precoding control information, and the related information of the intra-frequency neighboring cell; and
a manner in which the information about the physical control channel includes the related information of the intra-frequency neighboring cell includes:
performing joint coding on the related information of the intra-frequency neighboring cell and the channel quality information and/or the precoding control information to form new 20-bit information.

With reference to the sixth aspect or the first possible implementation manner to the tenth possible implementation manner of the sixth aspect, in an eleventh possible implementation manner, the second receiver is configured to:
if a predefined code point in the bit field for the related information of the intra-frequency neighboring cell is received, learn, by using the code point, that the related information of the intra-frequency neighboring cell is not transmitted over the uplink HS-DPCCH; where
if there is an intra-frequency neighboring cell whose signal quality or signal strength does not meet the first threshold, or if the base station to which the user equipment belongs has already received the related information of the intra-frequency neighboring cell that meets the first threshold, the base station to which the user equipment belongs does not receive the related information of the intra-frequency neighboring cell.

With reference to the sixth aspect or the first possible implementation manner to the eleventh possible implementation manner of the sixth aspect, in a twelfth possible implementation manner, the scheduling information includes the related information of the intra-frequency neighboring cell and a highest priority logical channel identifier; and
the second receiver is configured to:
when a highest priority logical channel identifier bit field in the received scheduling information is equal to a predefined or network-configured value, learn, by using one or several bit fields of a total E-DCH buffer status bit field, a highest priority logical channel buffer status bit field, and a UE power headroom bit field that are in the scheduling information, the related information of the intra-frequency neighboring cell.

With reference to the sixth aspect or the first possible implementation manner to the twelfth possible implementation manner of the sixth aspect, in a thirteenth possible implementation manner, the base station further includes:
configure, by means of predefinition or a network, a repetition period for transmitting the related information of the intra-frequency neighboring cell, receive multiple pieces of same related information of the intra-frequency neighboring cell in the repetition period, and combine the multiple pieces of the same related information of the intra-frequency neighboring cell.

The embodiments of the present invention provide a method for an uplink softer handover and a user equipment. Signal quality or signal strength of an intra-frequency neighboring cell is detected; if there is an intra-frequency neighboring cell whose signal quality or signal strength meets a first threshold, related information of the intra-frequency neighboring cell that meets the first threshold is reported, through a physical control channel or by using scheduling information, to a base station to which a user equipment belongs; then, a repetition period for transmitting the related information of the intra-frequency neighboring cell is configured by means of predefinition or a network, and multiple pieces of same related information of the intra-frequency neighboring cell are transmitted repeatedly in the repetition period, so that the base station combines the multiple pieces of the same related information of the intra-frequency neighboring cell. An uplink softer handover can be supported in a cell forward access channel state, thereby improving performance of a user equipment located on an edge of a cell, and meanwhile increasing processing efficiency of a base station.

### BRIEF DESCRIPTION OF DRAWINGS

To describe the technical solutions in the embodiments of the present invention art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for an uplink softer handover according to Embodiment 1 of the present invention;
FIG. 2 is a schematic flowchart of another method for an uplink softer handover according to Embodiment 2 of the present invention;
FIG. 3A and FIG 3B are a schematic flowchart of a method for an uplink softer handover according to Embodiment 3 of the present invention;
FIG. 4 is a schematic structural diagram of a user equipment according to Embodiment 4 of the present invention;
FIG 5 is a schematic structural diagram of another user equipment according to Embodiment 4 of the present invention;
FIG. 6 is a schematic structural diagram of another user equipment according to Embodiment 4 of the present invention;
FIG. 7 is a schematic structural diagram of another user equipment according to Embodiment 4 of the present invention;
FIG. 8 is a schematic structural diagram of a base station according to Embodiment 5 of the present invention;
FIG 9 is a schematic structural diagram of a user equipment according to Embodiment 6 of the present invention;
FIG. 10 is a schematic structural diagram of another user equipment according to Embodiment 6 of the present invention;
FIG. 11 is a schematic structural diagram of a base station according to Embodiment 7 of the present invention; and
FIG. 12 is a schematic structural diagram of another base station according to Embodiment 7 of the present invention.

### BRIEF DESCRIPTION OF DRAWINGS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

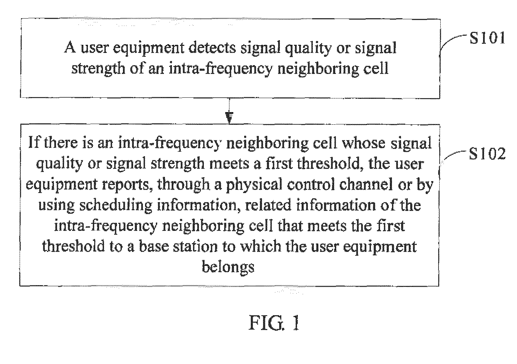

Embodiment 1 of the present invention provides a method for an uplink softer handover. As shown in FIG. 1, the method includes the following steps:
S101. A user equipment detects signal quality or signal strength of an intra-frequency neighboring cell.

The intra-frequency neighboring cell may be a set of neighboring cells that have a same frequency as a serving cell in which the user equipment is located.
S102. If there is an intra-frequency neighboring cell whose signal quality or signal strength meets a first threshold, the user equipment reports, through a physical control channel or by using scheduling information, related information of the intra-frequency neighboring cell that meets the first threshold to a base station to which the user equipment belongs.

Further, a repetition period for transmitting the related information of the intra-frequency neighboring cell may be configured by means of predefinition or a network, and multiple pieces of same related information of the intra-frequency neighboring cell are transmitted repeatedly in the repetition period, so that the base station combines the multiple pieces of the same related information of the intra-frequency neighboring cell.

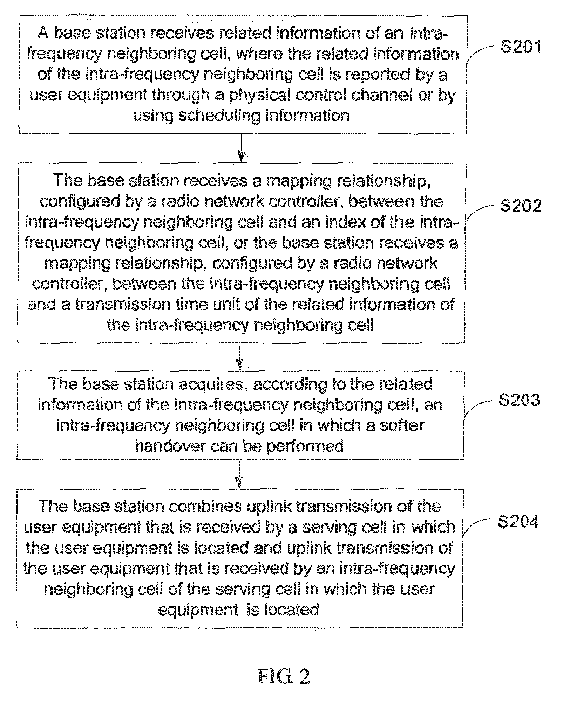

Embodiment 2 of the present invention further provides a method for an uplink softer handover. As shown in FIG. 2, the method includes the following steps:
S201. A base station receives related information of an intra-frequency neighboring cell, where the related information of the intra-frequency neighboring cell is reported by a user equipment through a physical control channel or by using scheduling information.

The base station may be a combination of multiple base stations that receive the related information of the intra-frequency neighboring cell.
S202. The base station receives a mapping relationship, configured by a radio network controller, between the intra-frequency neighboring cell and an index of the intra-frequency neighboring cell, or the base station receives a mapping relationship, configured by a radio network controller, between the intra-frequency neighboring cell and a transmission time unit in which the related information of the intra-frequency neighboring cell is transmitted.
S203. The base station acquires, according to the related information of the intra-frequency neighboring cell, an intra-frequency neighboring cell in which a softer handover can be performed.
S204. The base station combines uplink transmission of the user equipment that is received by a serving cell in which the user equipment is located and uplink transmission of the user equipment that is received by an intra-frequency neighboring cell of the serving cell in which the user equipment is located.

This embodiment of the present invention provides a method for an uplink softer handover. Signal quality or signal strength of an intra-frequency neighboring cell is detected; if there is an intra-frequency neighboring cell whose signal quality or signal strength meets a first threshold, related information of the intra-frequency neighboring cell that meets the first threshold is reported, through a physical control channel or by using scheduling information, to a base station to which a user equipment belongs; then, a repetition period for transmitting the related information of the intra-frequency neighboring cell is configured by means of predefinition or a network, and multiple pieces of same related information of the intra-frequency neighboring cell are transmitted repeatedly in the repetition period, so that the base station combines the multiple pieces of the same related information of the intra-frequency neighboring cell. An uplink softer handover can be supported in a cell forward access channel state, thereby improving performance of a user equipment located on an edge of a cell, and meanwhile increasing processing efficiency of a base station.

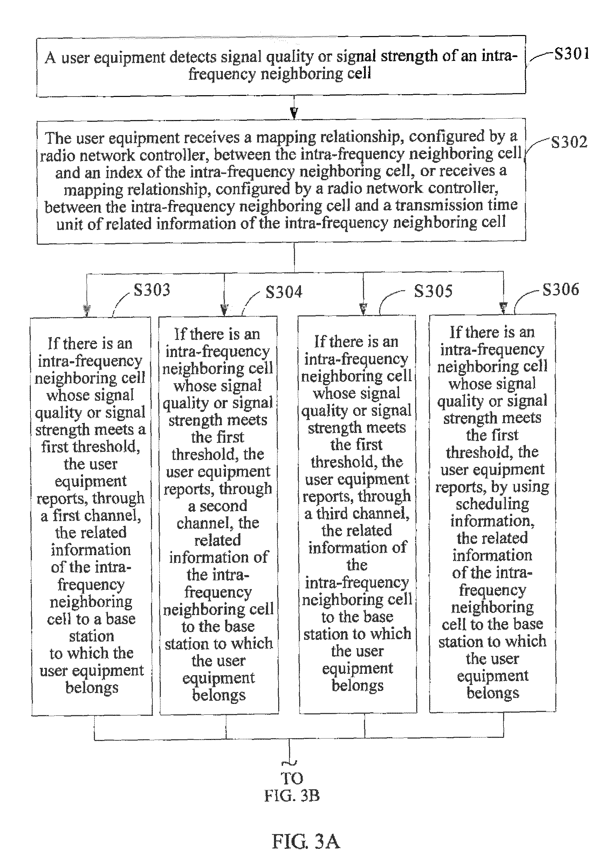

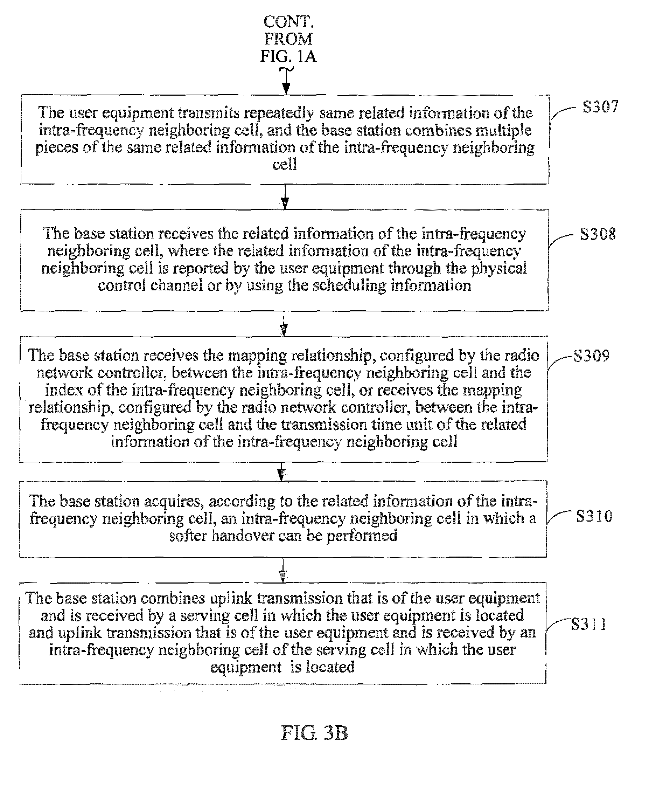

Embodiment 3 of the present invention provides a method for an uplink softer handover. As shown in FIG. 3, the method includes the following steps:
S301. A user equipment detects signal quality or signal strength of an intra-frequency neighboring cell.

Currently, a connected mode of the user equipment has four states: CELL_PCH (CELL Paging Channel, cell paging channel), URA_PCH (UTRAN Registration Area Paging Channel, UTRAN registration area paging channel), CELL_FACH (CELL Forward Access Channel, cell forward access channel), and CELL_DCH (CELL Dedicated Channel, cell dedicated channel).

After completing an RRC (Radio Resource Control, radio resource control protocol) connection, the user equipment transits from an idle mode to a connected mode, that is, the user equipment enters the CELL-FACH state or the CELL-DCH state.

The intra-frequency neighboring cell may be a set of cells that are connected to a user equipment, and user information may be sent from these cells. These intra-frequency neighboring cells are cells that have an RRC connection with the user equipment, an air channel has been allocated to the cells, and the user equipment is maintained over radio channels of multiple cells at the same time.

S302. The user equipment receives a mapping relationship, configured by a radio network controller, between the intra-frequency neighboring cell and an index of the intra-frequency neighboring cell, or receives a mapping relationship, configured by a radio network controller, between the intra-frequency neighboring cell and a transmission time unit of related information of the intra-frequency neighboring cell.

Specifically, before the user equipment reports, through a physical control channel or by using scheduling information, the related information of the intra-frequency neighboring cell to a base station to which the user equipment belongs, the user equipment may receive a mapping relationship, configured by an RNC (Radio Network Controlling device, radio network controller), between the intra-frequency neighboring cell and the index of the intra-frequency neighboring cell, so that the user equipment acquires, according to the index, the intra-frequency neighboring cell corresponding to the index.

Alternatively, the user equipment may receive a mapping relationship, configured by an RNC, between the intra-frequency neighboring cell and the transmission time unit in which the related information of the intra-frequency neighboring cell is transmitted, so that the user equipment acquires, according to the mapping relationship, the intra-frequency neighboring cell corresponding to the transmission time unit in which the related information of the intra-frequency neighboring cell is transmitted.

It should be noted that, after S302 is performed, if there is an intra-frequency neighboring cell whose signal quality or signal strength meets a first threshold, related information of the intra-frequency neighboring cell that meets the first threshold is reported, through a physical control channel or by using scheduling information, to the base station to which the user equipment belongs. If the related information of the intra-frequency neighboring cell is reported through a physical control channel to the base station to which the user equipment belongs, a method in S303-305 is used to report the related information; if the related information of the intra-frequency neighboring cell is reported by using scheduling information to the base station to which the user equipment belongs, a method in S3065 is used to report the related information.

When the related information of the intra-frequency neighboring cell is reported to the base station through a first channel, S303 is performed; when the related information of the intra-frequency neighboring cell is reported to the base station through a second channel, S304 is performed; when the related information of the intra-frequency neighboring cell is reported to the base station through a third channel, S305 is performed; and when the related information of the intra-frequency neighboring cell is reported by using the scheduling information to the base station to which the user equipment belongs, S306 is performed. The following separately describes S303-S306 in detail.
S303. If there is an intra-frequency neighboring cell whose signal quality or signal strength meets a first threshold, the user equipment reports, through a first channel, related information of the intra-frequency neighboring cell to a base station to which the user equipment belongs.

The related information of the intra-frequency neighboring cell includes: an index of the intra-frequency neighboring cell, or indication information indicating that the intra-frequency neighboring cell supports a softer handover.

When the related information of the intra-frequency neighboring cell includes the index of the intra-frequency neighboring cell, the index of the intra-frequency neighboring cell is determined according to the mapping relationship, configured by the RNC, between the intra-frequency neighboring cell and the index of the intra-frequency neighboring cell; or when the related information of the intra-frequency neighboring cell includes the indication information indicating that the intra-frequency neighboring cell supports a softer handover, the indication information indicating that the intra-frequency neighboring cell supports a softer handover is determined according to the mapping relationship, configured by the RNC, between the intra-frequency neighboring cell and the transmission time unit in which the related information of the intra-frequency neighboring cell is transmitted.

Specifically, the first threshold may be a network-configured or predefined downlink pilot signal quality or signal strength threshold of an intra-frequency neighboring cell. The foregoing first channel may be an uplink DPCCH (Dedicated Physical Control Channel, dedicated physical control channel). When there is an intra-frequency neighboring cell whose downlink pilot signal quality meets the first threshold, it indicates that the intra-frequency neighboring cell meets a condition for supporting a softer handover in the CELL-FACH state. In this case, when a user equipment located on an edge of a serving cell initiates random access, because an intra-frequency neighboring cell of the user equipment meets the condition for supporting a softer handover in the CELL-FACH state, a connection can be established between the intra-frequency neighboring cell and the user equipment.

In communications technologies, WCDMA (Wideband Code Division Multiple Access, Wideband Code Division Multiple Access) handovers are classified into three types in total, which are respectively referred to as a soft handover, a softer handover, and a hard handover. The softer handover is a handover between different cells that are served by a same base station and have a same frequency. When a user equipment is located in an overlapping area of two cells or two neighboring sectors of a same base station, there are two radio links for communication between the user equipment and the base station, one link for each cell. A softer handover process implements a method for holding a call when a user equipment passes by a cell border. Specifically, the user equipment continuously scans downlink pilot signals of all cells in an active set, and establishes communication with a corresponding cell when a pilot signal meets the first threshold. Because all intra-frequency neighboring cells use multiple communications link channels of a same frequency, a communications link does not need to be interrupted for these handovers, instead, an optimum communications link is selected for a handover.

Exemplarily, when the user equipment reports the related information of the intra-frequency neighboring cell through an uplink DPCCH, the related information of the intra-frequency neighboring cell is included in information about the uplink DPCCH, where the information about the uplink DPCCH further includes pilot information and power control command word information, in addition to the related information of the intra-frequency neighboring cell.

Further, an including manner in which the related information of the intra-frequency neighboring cell is included in the information about the uplink DPCCH may be an explicit including manner or an implicit including manner.

The explicit including manner is that the related information of the intra-frequency neighboring cell is carried in a bit field for the related information of the intra-frequency neighboring cell. For example, as shown in Table 1, an uplink DPCCH timeslot format is added, which includes an INCRI (Intra-frequency Neighbouring Cell Relational Information, intra-frequency neighboring cell relational information) field, with a quantity of bits being I bits, a pilot information field, with a quantity of bits being P bits, a power control command word field, with a quantity of bits being T bits, a transport format combination indicator field, with a quantity of bits being C bits, and a feedback information field, with a quantity of bits being F bits, where I, P, T, C, and F are either zero or a positive integer, and I+P+T+C+F is less than or equal to 10 bits.

**Table 1**

| **Slot Format #i** | **Channel Bit Rate (kbps)** | **Channel Symbol Rate (ksps)** | **SF** | **Bits/Frame** | **Bits/Slot** | **Nₚᵢₗₒₜ** | **N_{TPC}** | **N_{TFCI}** | **N_{FBI}** | **N_{INCRI}** |
|---|---|---|---|---|---|---|---|---|---|---|
| 1 | 15 | 15 | 256 | 150 | 10 | P | T | C | F | I |

In Table 1, Slot Format represents a timeslot format index number; Channel Bit Rate represents a channel bit rate; SF represents a spreading factor; Bits/Frame represents a quantity of bits per frame; Bits/Slot represents a quantity of bits per timeslot; Npilot represents a quantity of bits of a pilot field; NTPC represents a quantity of bits of a power control command word field; NTFCI represents a quantity of bits of a transport format combination indicator field; NFBI represents a quantity of bits of a feedback information field; and NINCRI represents a quantity of bits of a bit field for the related information of an intra-frequency neighboring cell.

The implicit including manner is that, because an uplink DPCCH includes the pilot bit field and the power control command word bit field, if one of the pilot bit field and the power control command bit field is a network-configured value, it is determined that the other bit field carries the related information of the intra-frequency neighboring cell; and if both the pilot bit field and the power control command word bit field are predefined or network-configured values, a bit field except the pilot bit field and the power control command word bit field is used to carry the related information of the intra-frequency neighboring cell.

In addition, when the related information of the intra-frequency neighboring cell is reported, the whole related information of the intra-frequency neighboring cell may be reported in one timeslot or n timeslots. For example, when the related information of the intra-frequency neighboring cell is n bits and transmitted in n timeslots, 1-bit information is transmitted in each timeslot.

In addition, when the related information of the intra-frequency neighboring cell is not reported, a predefined code point or 1-bit indication information in the bit field for the related information of the intra-frequency neighboring cell is used to explicitly indicate that the related information of the intra-frequency neighboring cell is not transmitted over the uplink DPCCH. For example, if the related information of the intra-frequency neighboring cell is 3 bits, a code point 000 may be used to indicate that the related information of the intra-frequency neighboring cell is not transmitted over the uplink DPCCH; or 1-bit information, which is 0 or 1, may be used to indicate that the related information of the intra-frequency neighboring cell is not transmitted over the uplink DPCCH.

If there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.
S304. If there is an intra-frequency neighboring cell whose signal quality or signal strength meets the first threshold, the user equipment reports, through a second channel, the related information of the intra-frequency neighboring cell to the base station to which the user equipment belongs.

The second channel may be an E-DPCCH (E-DCH (Enhanced Dedicated Channel, enhanced dedicated channel) Dedicated Physical Control Channel, enhanced dedicated physical control channel).

Specifically, when the user equipment reports the related information of the intra-frequency neighboring cell through an uplink E-DPCCH, the related information of the intra-frequency neighboring cell is included in information about the uplink E-DPCCH, where the information about the uplink E-DPCCH further includes an E-TFCI (E-DCH Transport Format Combination Indicator, E-DPCCH transport format combination indicator), an RSN (Retransmission Sequence Number, retransmission sequence number), Happy bit (happy bit) information, and the related information of the intra-frequency neighboring cell, in addition to the related information of the intra-frequency neighboring cell.

Further, an including manner in which the related information of the intra-frequency neighboring cell is included in the information about the E-DPCCH may be an explicit including manner or an implicit including manner.

The explicit including manner may be that the related information of the intra-frequency neighboring cell is carried in a bit for the related information of the intra-frequency neighboring cell. For example, on the E-DPCCH, E-TFCI information is E bits, RSN information is R bits, the Happy bit information is H bits, and the related information of the intra-frequency neighboring cell is I bits, where E, R, H, and I are either zero or a positive integer, and E+R+H+I is less than or equal to 10 bits. Alternatively, on the E-DPCCH, E-TFCI information is E bits, NDI information is N bits, the Happy bit information is H bits, and the related information of the intra-frequency neighboring cell is I bits, where E, N, H, and I are either zero or a positive integer, and E+N+H+I is less than or equal to 10 bits.

The implicit including manner may be that, because a coding format of the E-DPCCH channel includes the E-TFCI information, the RSN information, and the Happy bit information, if one information bit of the E-TFCI information, the RSN information, and the Happy bit information is a predefined value or a network-configured value, it is determined that the other two information bits carry the related information of the intra-frequency neighboring cell. For example, if the E-TFCI information is a predefined value, the related information of the intra-frequency neighboring cell is carried in the RSN information and the Happy bit information; or, if two information bits of the E-TFCI information, the RSN information, and the Happy bit information are predefined values or network-configured values, it is determined that the other information bit carries the related information of the intra-frequency neighboring cell.

In addition, the uplink E-DPCCH may include an NDI (New Data Indicator, new data indicator), where the NDI is 1-bit information, and the NDI is reported through the E-DPCCH only when new data is transmitted. For example, in an NDI bit, if the NDI information is 1, it indicates that the present transmission is newly transmitted data; and if the NDI information is 0, it indicates that the present transmission is retransmitted data. Alternatively, by using an inverting mechanism, for example, if the NDI information is 0, it indicates that a feature of information that is being transmitted is consistent with that of information in a previous time unit, that is, it indicates that the present transmission is retransmitted data; and if the NDI information is 1, it indicates that a feature of the information that is being transmitted is inconsistent with that of the information in the previous time unit, that is, it indicates that the present transmission is newly transmitted data. A time unit herein may be a timeslot or a TTI (Transmission Time Interval, transmission time interval).

Specifically, when the information about the uplink E-DPCCH includes the NDI, the base station can learn, according to the related information of the intra-frequency neighboring cell and the current transmission time of the E-DPCCH physical control channel, of which intra-frequency neighboring cell related information is reported, that is, the base station can learn which intra-frequency neighboring cell can support a softer handover. For example, the related information that is of the intra-frequency neighboring cell and is reported by the user equipment to the base station is 1-bit, and counting starts from a subframe whose CFN (Connection Frame number, connection frame number)=0, where 8 subframes are used as one time unit. If the E-DPCCH is transmitted in the 2^{nd} subframe in this time unit, it may indicate that an intra-frequency neighboring cell corresponding to the E-DPCCH physical control channel in this 2^{nd} subframe can support a softer handover. The 2^{nd} subframe in the time unit may be the n^{th} subframe, which is not limited herein.

When the user equipment reports, through the E-DPCCH channel, the related information of the intra-frequency neighboring cell to the base station, the whole related information of the intra-frequency neighboring cell may still be reported in one timeslot or n timeslots.
S305. If there is an intra-frequency neighboring cell whose signal quality or signal strength meets the first threshold, the user equipment reports, through a third channel, the related information of the intra-frequency neighboring cell to the base station to which the user equipment belongs.

The third channel may be an HS-DPCCH (High-Speed Dedicated Physical Control Channel, high-speed dedicated physical control channel), which is a new uplink coding channel that is introduced in the 3GPP release 5 of the WCDMA and is used for a control purpose. A function of the HS-DPCCH is to carry necessary control signaling in an uplink link. Information transmitted on the HS-DPCCH includes at least an ACK/NACK (Acknowledgement/Negative Acknowledgement, acknowledgment/negative acknowledgment), a CQI/PCI (Channel Quality Indicator/Precoding Control Indication, channel quality information/precoding control indication), and the related information of the intra-frequency neighboring cell.

Specifically, a manner in which the HS-DPCCH physical control channel includes the related information of the intra-frequency neighboring cell may be as follows: the foregoing CQI/PCI information is 20 bits, of which useful information is 5 bits; joint coding is performed on the 5-bit useful information in the CQI/PCI information and the related information of the intra-frequency neighboring cell, so as to form new 20-bit information and transmit the information over the HS-DPCCH physical control channel.

In addition, when the related information of the intra-frequency neighboring cell is reported through the HS-DPCCH physical control channel, the user equipment may transmit the whole related information of the intra-frequency neighboring cell in one subframe; when the related information of the intra-frequency neighboring cell is not reported, a predefined code point in the bit field for the related information of the intra-frequency neighboring cell may be used to indicate that the related information of the intra-frequency neighboring cell is not transmitted over the uplink HS-DPCCH.
S306. If there is an intra-frequency neighboring cell whose signal quality or signal strength meets the first threshold, the user equipment reports, by using scheduling information, the related information of the intra-frequency neighboring cell to the base station to which the user equipment belongs.

When there is related information of the intra-frequency neighboring cell that meets the first threshold, that is, a condition for a softer handover in the cell forward access channel state is met, an uplink link may be triggered to transmit the SI (scheduling information, scheduling information) that includes the related information of the intra-frequency neighboring cell, that is, the user equipment reports, in the SI, the related information of the intra-frequency neighboring cell that meets the first threshold to the base station that serves the user equipment. A size of the SI information is 18 bits.

Exemplarily, when the user equipment reports the related information of the intra-frequency neighboring cell by using the SI, the related information of the intra-frequency neighboring cell is included in the SI, where the SI may further include an HLID (Highest priority Logical Channel ID, highest priority logical channel identifier), in addition to the related information of the intra-frequency neighboring cell.

Specifically, when the user equipment needs to transmit the related information of the intra-frequency neighboring cell; assuming that an HLID bit field is a predefined or network-configured value, and assuming that a size of the HLID bit field may be 4 bits, and one or several bit fields of a TEBS (Total E-DCH Buffer Status, total E-DCH buffer status) bit field, an HLBS (Highest priority Logical channel Buffer Status, highest priority logical channel buffer status) bit field, and a UPH (UE Power Headroom, UE power headroom) bit field are used to transmit the related information of the intra-frequency neighboring cell whose size may be 1 bit to 14 bits, the 4-bit information of the predefined or network-configured value, the related information of the intra-frequency neighboring cell, and remaining bits together form the 18-bit SI, and then, the SI is reported to the base station that serves the user equipment.

Alternatively, assuming that one or several of the TEBS, the HLBS, and the UPH are predefined or network-configured values, the related information of the intra-frequency neighboring cell is transmitted in one or several remaining bit fields, and then, the predefined or network-configured values, the related information of the intra-frequency neighboring cell, and the remaining bits together form the 18-bit SI, and then, the SI is reported to the base station that serves the user equipment.

Further, when the user equipment does not report, on the uplink link, the related information of the intra-frequency neighboring cell, the HLID may be a non-predefined or non-network-configured value.
S307. The user equipment transmits repeatedly same related information of the intra-frequency neighboring cell; and the base station combines multiple pieces of the same related information of the intra-frequency neighboring cell.

Specifically, when the user equipment transmits the related information of the intra-frequency neighboring cell through the physical control channel, a repetition period for transmitting the related information of the intra-frequency neighboring cell may be configured by means of predefinition or a network. Multiple pieces of the same related information of the intra-frequency neighboring cell are transmitted repeatedly in the repetition period, so that the base station combines the multiple pieces of the same related information of the intra-frequency neighboring cell. In this way, a detection rate and reliability of the related information of the intra-frequency neighboring cell can be improved.
S308. The base station receives the related information of the intra-frequency neighboring cell, where the related information of the intra-frequency neighboring cell is reported by the user equipment through the physical control channel or by using the scheduling information.
S309. The base station receives the mapping relationship, configured by the radio network controller, between the intra-frequency neighboring cell and the index of the intra-frequency neighboring cell, or receives the mapping relationship, configured by the radio network controller, between the intra-frequency neighboring cell and the transmission time unit in which the related information of the intra-frequency neighboring cell is transmitted.
S310. The base station acquires, according to the related information of the intra-frequency neighboring cell, an intra-frequency neighboring cell in which a softer handover can be performed.
S311. The base station combines uplink transmission of the user equipment that is received by a serving cell in which the user equipment is located and uplink transmission of the user equipment that is received by an intra-frequency neighboring cell of the serving cell in which the user equipment is located,

Specifically, after the user equipment reports, to the base station, related information of the intra-frequency neighboring cell that can support an uplink softer handover, there are two radio links for communication between the user equipment and the base station, that is, a radio link of a serving cell in which the user equipment is located and a radio link of the intra-frequency neighboring cell that is reported and can support a softer handover. The user equipment respectively reports, on these two radio links, an uplink transmission data block received by the serving cell in which the user equipment is located and an uplink transmission data block received by the intra-frequency neighboring cell to the base station; and then, the base station combines the uplink transmission data block received by the serving cell and the uplink transmission data block received by the intra-frequency neighboring cell. A user equipment located on an edge of the serving cell always keeps communication with the serving cell and the intra-frequency neighboring cell at the same time until a softer handover process of the user equipment is fully completed. In this way, the base station can acquire an uplink data block received by the intra-frequency neighboring cell that can support a softer handover, and does not need to perform blind detection on multiple intra-frequency neighboring cells of the user equipment, thereby increasing processing efficiency of the base station.

This embodiment of the present invention provides a method for an uplink softer handover. Signal quality or signal strength of an intra-frequency neighboring cell is detected; if there is an intra-frequency neighboring cell whose signal quality or signal strength meets a first threshold, related information of the intra-frequency neighboring cell that meets the first threshold is reported, through a physical control channel or by using scheduling information, to a base station to which a user equipment belongs; then, a repetition period for transmitting the related information of the intra-frequency neighboring cell is configured by means of predefinition or a network, and multiple pieces of same related information of the intra-frequency neighboring cell are transmitted repeatedly in the repetition period, so that the base station combines the multiple pieces of the same related information of the intra-frequency neighboring cell. An uplink softer handover can be supported in a cell forward access channel state, thereby improving performance of a user equipment located on an edge of a cell, and meanwhile increasing processing efficiency of a base station.

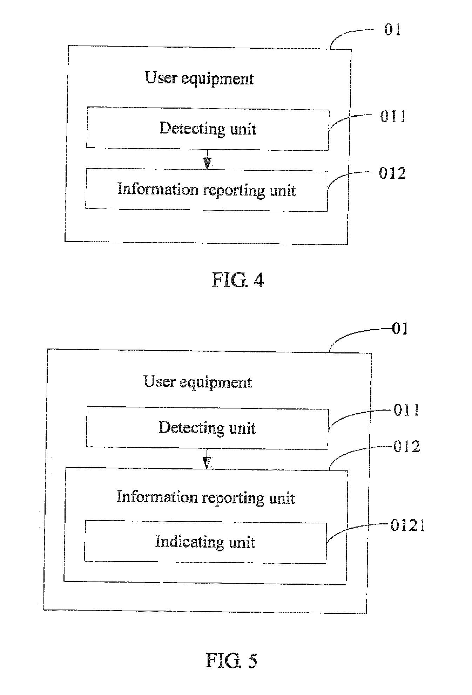

Embodiment 4 of the present invention provides a user equipment 01. As shown in FIG. 4, the user equipment 01 is used to implement the methods in the foregoing Embodiments 1 and 3, and includes:
a detecting unit 011, configured for the user equipment to detect signal quality or signal strength of an intra-frequency neighboring cell and send the signal quality or signal strength of the intra-frequency neighboring cell to an information reporting unit 012; and
the information reporting unit 012, configured to receive the signal quality or signal strength of the intra-frequency neighboring cell from the detecting unit 011, and if there is an intra-frequency neighboring cell whose signal quality or signal strength meets a first threshold, report, through a physical control channel or by using scheduling information, related information of the intra-frequency neighboring cell that meets the first threshold to a base station to which the user equipment belongs.

The related information of the intra-frequency neighboring cell includes:
an index of the intra-frequency neighboring cell, or indication information indicating that the intra-frequency neighboring cell supports a softer handover.

Before the information reporting unit 012 reports, through the physical control channel or by using the scheduling information, the related information of the intra-frequency neighboring cell to the base station to which the user equipment belongs, the information reporting unit 012 may be further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

Further, the index of the intra-frequency neighboring cell is determined according to the mapping relationship, configured by the radio network controller, between the intra-frequency neighboring cell and the index of the intra-frequency neighboring cell.

The indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

The first threshold may include a network-configured or predefined downlink pilot signal quality or signal strength threshold of an intra-frequency neighboring cell.

Further, the physical control channel includes an uplink dedicated physical control channel DPCCH, an uplink enhanced dedicated physical control channel E-DPCCH, or an uplink high-speed dedicated physical control channel HS-DPCCH.

Still further, when the physical control channel is an uplink DPCCH, information about the physical control channel includes: pilot information, power control command word information, and the related information of the intra-frequency neighboring cell; and
the information reporting unit 012 may be specifically configured to:
the uplink DPCCH explicitly includes the related information of the intra-frequency neighboring cell directly: the related information of the intra-frequency neighboring cell is carried in a bit field for the related information of the intra-frequency neighboring cell; or
the uplink DPCCH implicitly includes the related information of the intra-frequency neighboring cell: a format of the uplink DPCCH includes a pilot bit field and a power control command word bit field, where if one of the pilot bit field and the power control command bit field is a network-configured value, it is determined that the other bit field carries the related information of the intra-frequency neighboring cell; and if both the pilot bit field and the power control command word bit field are predefined or network-configured values, a bit field except the pilot bit field and the power control command word bit field is used to carry the related information of the intra-frequency neighboring cell.

Further, as shown in FIG. 5, the information reporting unit 012 may further include:
an indicating unit 0121, configured to, when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink DPCCH; or implicitly indicate, by using a non-predefined or non-network-configured value that is transmitted in the pilot bit field and/or the power control command word bit field, that the related information of the intra-frequency neighboring cell is not transmitted over the uplink DPCCH.

If there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

Still further, when the physical control channel is an uplink E-DPCCH, the information about the physical control channel includes: an E-DPCCH transport format combination indicator, a retransmission sequence number or a new data indicator, happy bit information, and the related information of the intra-frequency neighboring cell.

The information reporting unit 012 may be specifically configured to:
the uplink E-DPCCH explicitly includes the related information of the intra-frequency neighboring cell directly: the related information of the intra-frequency neighboring cell is carried in a bit for the related information of the intra-frequency neighboring cell; or
the uplink E-DPCCH implicitly includes the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

Still further, the information reporting unit 012 may further include:
the indicating unit 0121, further configured to, when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink E-DPCCH; or implicitly indicate, by using a non-predefined or non-network-configured value that is transmitted in a bit field for an E-DPCCH transmission format combination indicator, that the related information of the intra-frequency neighboring cell is not transmitted over the uplink E-DPCCH.

If there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

Still further, when the physical control channel is an uplink E-DPCCH and the information about the physical control channel includes the new data indicator, the new data indicator is 1-bit information.

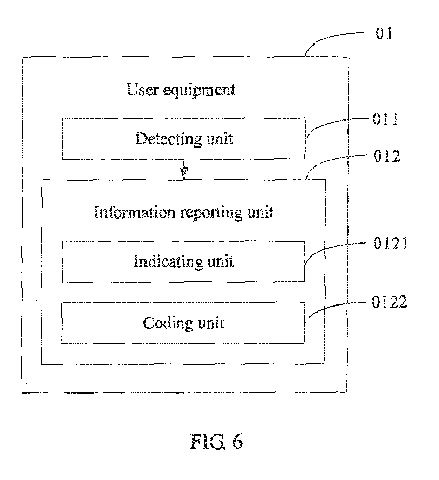

Still further, as shown in FIG. 6, when the physical control channel is an uplink HS-DPCCH, the information about the physical control channel includes: an acknowledgment or a negative acknowledgment, channel quality information and/or precoding control information, and the related information of the intra-frequency neighboring cell.

The information reporting unit 012 may further include:
a coding unit 0122, configured to perform joint coding on the related information of the intra-frequency neighboring cell and the channel quality information and/or the precoding control information to form new 20-bit information.

Still further, the information reporting unit 012 may further include:
the indicating unit 0121, further configured to, when the related information of the intra-frequency neighboring cell is not reported, indicate, by using a predefined code point in the bit field for the related information of the intra-frequency neighboring cell, that the related information of the intra-frequency neighboring cell is not transmitted over the uplink HS-DPCCH.

If there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

Still further, the scheduling information includes: the related information of the intra-frequency neighboring cell and a highest priority logical channel identifier; and
the information reporting unit 012 may be specifically configured to:
transmit, by using one or several bit fields of a total E-DCH buffer status bit field, a highest priority logical channel buffer status bit field, and a UE power headroom bit field, the related information of the intra-frequency neighboring cell, where a highest priority logical channel identifier bit field is equal to a predefined or network-configured value.

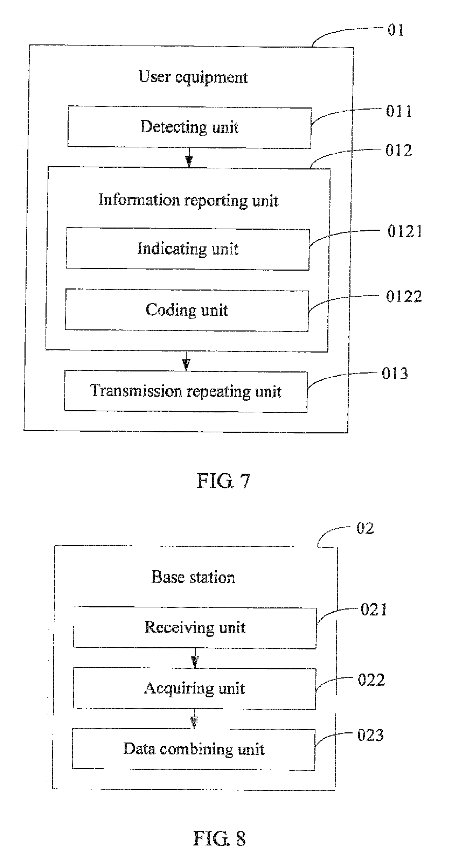

Still further, as shown in FIG. 7, the user equipment 01 may further include:
a repeated transmission unit 013, configured to configure, by means of predefinition or a network, a repetition period for transmitting the related information of the intra-frequency neighboring cell, and repeatedly transmit multiple pieces of same related information of the intra-frequency neighboring cell in the repetition period, so that the base station combines the multiple pieces of the same related information of the intra-frequency neighboring cell.

This embodiment of the present invention provides a user equipment for an uplink softer handover. Signal quality or signal strength of an intra-frequency neighboring cell is detected; if there is an intra-frequency neighboring cell whose signal quality or signal strength meets a first threshold, related information of the intra-frequency neighboring cell that meets the first threshold is reported, through a physical control channel or by using scheduling information, to a base station to which the user equipment belongs; then, a repetition period for transmitting the related information of the intra-frequency neighboring cell is configured by means of predefinition or a network, and multiple pieces of same related information of the intra-frequency neighboring cell are transmitted repeatedly in the repetition period, so that the base station combines the multiple pieces of the same related information of the intra-frequency neighboring cell. An uplink softer handover can be supported in a cell forward access channel state, thereby improving performance of a user equipment located on an edge of a cell, and meanwhile increasing processing efficiency of a base station.

Embodiment 5 of the present invention further provides a base station 02. As shown in FIG 8, the base station 02 is configured to implement the method in Embodiments 2 and 3, and includes:
a receiving unit 021, configured for the base station to receive related information of an intra-frequency neighboring cell, where the related information of the intra-frequency neighboring cell is reported by a user equipment through a physical control channel or by using scheduling information;
an acquiring unit 022, configured to acquire, according to the related information of the intra-frequency neighboring cell, an intra-frequency neighboring cell in which a softer handover can be performed; and
a data combining unit 023, configured to combine uplink transmission of the user equipment that is received by a serving cell in which the user equipment is located and uplink transmission of the user equipment that is received by an intra-frequency neighboring cell of the serving cell in which the user equipment is located.

The related information of the intra-frequency neighboring cell includes:
an index of the intra-frequency neighboring cell, or indication information indicating that the intra-frequency neighboring cell supports a softer handover.

Before the intra-frequency neighboring cell in which a softer handover can be performed is acquired according to the related information of the intra-frequency neighboring cell, the receiving unit 021 may be further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

Further, the index of the intra-frequency neighboring cell is determined according to the mapping relationship, configured by the radio network controller, between the intra-frequency neighboring cell and the index of the intra-frequency neighboring cell.

The indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

Further, the physical control channel that receives the user equipment includes an uplink dedicated physical control channel DPCCH, an uplink enhanced dedicated physical control channel E-DPCCH, or an uplink high-speed dedicated physical control channel HS-DPCCH.

Still further, when the physical control channel is an uplink DPCCH, information about the physical control channel includes: a pilot, a power control command word, and the related information of the intra-frequency neighboring cell; and
the receiving unit 021 may be specifically configured to:
the uplink DPCCH explicitly includes the related information of the intra-frequency neighboring cell directly: the related information of the intra-frequency neighboring cell is carried in a bit field for the related information of the intra-frequency neighboring cell; or
the uplink DPCCH implicitly includes the related information of the intra-frequency neighboring cell: the uplink DPCCH includes a pilot bit field and a power control command word bit field, where if one of the pilot bit field and the power control command bit field is a network-configured value or a predefined value, it is determined that the other bit field carries the related information of the intra-frequency neighboring cell; and if both the pilot bit field and the power control command word bit field are network-configured values or predefined values, a bit field except the pilot bit field and the power control command word bit field is used to carry the related information of the intra-frequency neighboring cell.

Still further, the receiving unit 021 may be further configured to:
if a predefined code point or 1-bit indication information in the bit field for the related information of the intra-frequency neighboring cell is received, explicitly learn that the related information of the intra-frequency neighboring cell is not transmitted over the uplink DPCCH; or if a non-predefined or non-network-configured value that is transmitted in the pilot bit field and/or the power control command word bit field is received, implicitly learn that the related information of the intra-frequency neighboring cell is not transmitted over the uplink DPCCH.

If there is an intra-frequency neighboring cell whose signal quality or signal strength does not meet a first threshold, or if a base station to which the user equipment belongs has already received the related information of the intra-frequency neighboring cell that meets the first threshold, the base station to which the user equipment belongs does not receive the related information of the intra-frequency neighboring cell.

Still further, when the physical control channel is an uplink E-DPCCH, the information about the physical control channel includes: an E-DPCCH transport format combination indicator, a retransmission sequence number or a new data indicator, happy bit information, and the related information of the intra-frequency neighboring cell.

The receiving unit 021 maybe specifically configured to:
the uplink E-DPCCH explicitly includes the related information of the intra-frequency neighboring cell directly: the related information of the intra-frequency neighboring cell is carried in a bit for the related information of the intra-frequency neighboring cell; or
the uplink E-DPCCH implicitly includes the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

Still further, the receiving unit 021 may be further configured to:
if a predefined code point or 1-bit indication information in the bit field for the related information of the intra-frequency neighboring cell is received, explicitly learn that the related information of the intra-frequency neighboring cell is not transmitted over the uplink E-DPCCH; or if a non-predefined or non-network-configured value that is transmitted in the E-DPCCH transport format combination indicator bit field is received, implicitly learn that the related information of the intra-frequency neighboring cell is not transmitted over the uplink E-DPCCH.

If there is an intra-frequency neighboring cell whose signal quality or signal strength does not meet the first threshold, or if the base station to which the user equipment belongs has already received the related information of the intra-frequency neighboring cell that meets the first threshold, the base station to which the user equipment belongs does not receive the related information of the intra-frequency neighboring cell.

Still further, when the physical control channel is an uplink E-DPCCH, and the information about the physical control channel includes the new data indicator, the new data indicator may be 1-bit information.

Still further, when the physical control channel is an uplink HS-DPCCH, the information about the physical control channel includes: an acknowledgment or a negative acknowledgment, channel quality information and/or precoding control information, and the related information of the intra-frequency neighboring cell.

A manner in which the information about the physical control channel includes the related information of the intra-frequency neighboring cell may include:
performing joint coding on the related information of the intra-frequency neighboring cell and the channel quality information and/or the precoding control information to form new 20-bit information.

Still further, the receiving unit 021 may be configured to:
if a predefined code point in the bit field for the related information of the intra-frequency neighboring cell is received, learn, by using the code point, that the related information of the intra-frequency neighboring cell is not transmitted over the uplink HS-DPCCH.

If there is an intra-frequency neighboring cell whose signal quality or signal strength does not meet the first threshold, or if the base station to which the user equipment belongs has already received the related information of the intra-frequency neighboring cell that meets the first threshold, the base station to which the user equipment belongs does not receive the related information of the intra-frequency neighboring cell.

Still further, the scheduling information includes the related information of the intra-frequency neighboring cell and a highest priority logical channel identifier.

The receiving unit 021 may be configured to:
when a highest priority logical channel identifier bit field in the received scheduling information is equal to a predefined or network-configured value, learn, by using one or several bit fields of a total E-DCH buffer status bit field, a highest priority logical channel buffer status bit field, and a UE power headroom bit field that are in the scheduling information, the related information of the intra-frequency neighboring cell.

Further, the base station may further include:
configure, by means of predefinition or a network, a repetition period for transmitting the related information of the intra-frequency neighboring cell, receive multiple pieces of same related information of the intra-frequency neighboring cell in the repetition period, and combine the multiple pieces of the same related information of the intra-frequency neighboring cell.

This embodiment of the present invention provides a base station for an uplink softer handover. A user equipment detects signal quality or signal strength of an intra-frequency neighboring cell; if there is an intra-frequency neighboring cell whose signal quality or signal strength meets a first threshold, the user equipment reports, through a physical control channel or by using scheduling information, related information of the intra-frequency neighboring cell that meets the first threshold to a base station to which the user equipment belongs; the base station combines uplink transmission of the user equipment that is received by a serving cell in which the user equipment is located and uplink transmission of the user equipment that is received by an intra-frequency neighboring cell of the user equipment. An uplink softer handover can be supported in a cell forward access channel state, thereby improving performance of a user equipment located on an edge of a cell, and meanwhile increasing processing efficiency of a base station.

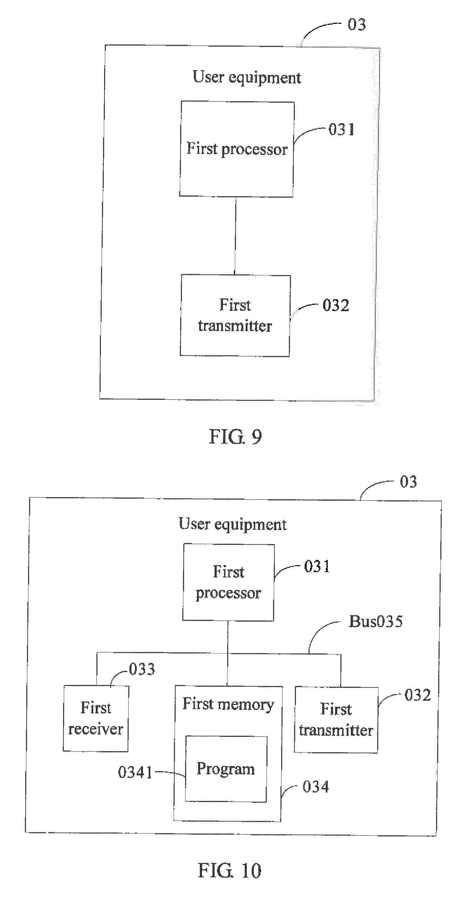

Embodiment 6 of the present invention provides a user equipment 03, which is used to implement the methods in Embodiments 1 and 3, and as shown in FIG 9, the user equipment 03 may include:
a first processor 031, configured for the user equipment to detect signal quality or signal strength of an intra-frequency neighboring cell and send the signal quality or signal strength of the intra-frequency neighboring cell to a first transmitter 032; and
the first transmitter 032, configured to receive the signal quality or signal strength of the intra-frequency neighboring cell from the first processor 031, and if there is an intra-frequency neighboring cell whose signal quality or signal strength meets a first threshold, report, through a physical control channel or by using scheduling information, related information of the intra-frequency neighboring cell
that meets the first threshold to a base station to which the user equipment belongs.

The related information of the intra-frequency neighboring cell includes:
an index of the intra-frequency neighboring cell, or indication information indicating that the intra-frequency neighboring cell supports a softer handover.

Before the related information of the intra-frequency neighboring cell is reported, through the physical control channel or by using the scheduling information, to the base station to which the user equipment belongs, a first receiver 033 may be further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

Further, the index of the intra-frequency neighboring cell is determined according to the mapping relationship, configured by the radio network controller, between the intra-frequency neighboring cell and the index of the intra-frequency neighboring cell.

The indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

The first threshold may include a network-configured or predefined downlink pilot signal quality or signal strength threshold of an intra-frequency neighboring cell.

Further, the physical control channel may include an uplink dedicated physical control channel DPCCH, an uplink enhanced dedicated physical control channel E-DPCCH, or an uplink high-speed dedicated physical control channel HS-DPCCH.

Still further, when the physical control channel is an uplink DPCCH, information about the physical control channel includes: pilot information, power control command word information, and the related information of the intra-frequency neighboring cell.

The first transmitter 032 may be specifically configured to:
the uplink DPCCH explicitly includes the related information of the intra-frequency neighboring cell directly: the related information of the intra-frequency neighboring cell is carried in a bit field for the related information of the intra-frequency neighboring cell; or
the uplink DPCCH implicitly includes the related information of the intra-frequency neighboring cell: a format of the uplink DPCCH includes a pilot bit field and a power control command word bit field, where if one of the pilot bit field and the power control command bit field is a network-configured value, it is determined that the other bit field carries the related information of the intra-frequency neighboring cell; and if both the pilot bit field and the power control command word bit field are predefined or network-configured values, a bit field except the pilot bit field and the power control command word bit field is used to carry the related information of the intra-frequency neighboring cell.

Still further, the first transmitter 032 may be further configured to:
when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink DPCCH; or implicitly indicate, by using a non-predefined or non-network-configured value that is transmitted in the pilot bit field and/or the power control command word bit field, that the related information of the intra-frequency neighboring cell is not transmitted over the uplink DPCCH.

If there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

Still further, when the physical control channel is an uplink E-DPCCH, the information about the physical control channel includes: an E-DPCCH transport format combination indicator, a retransmission sequence number or a new data indicator, happy bit information, and the related information of the intra-frequency neighboring cell.

A manner in which the information about the physical control channel includes the related information of the intra-frequency neighboring cell may include:
explicitly including, by the uplink E-DPCCH, the related information of the intra-frequency neighboring cell directly: the related information of the intra-frequency neighboring cell is carried in a bit for the related information of the intra-frequency neighboring cell; or
implicitly including, by the uplink E-DPCCH, the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

Still further, the first transmitter 032 may be further configured to:
when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink E-DPCCH; or implicitly indicate, by using a non-predefined or non-network-configured value that is transmitted in bit field for an E-DPCCH transmission format combination indicator, that the related information of the intra-frequency neighboring cell is not transmitted over the uplink E-DPCCH.
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

Still further, when the physical control channel is an uplink E-DPCCH and the information about the physical control channel includes the new data indicator, the new data indicator is 1-bit information.

Still further, when the physical control channel is an uplink HS-DPCCH, the information about the physical control channel includes an acknowledgment or a negative acknowledgment, channel quality information and/or precoding control information, and the related information of the intra-frequency neighboring cell.

The first transmitter 032 may be specifically configured to:
perform joint coding on the related information of the intra-frequency neighboring cell and the channel quality information and/or the precoding control information to form new 20-bit information.

Still further, the first transmitter 032 may be further configured to:
when the related information of the intra-frequency neighboring cell is not reported, indicate, by using a predefined code point in the bit field for the related information of the intra-frequency neighboring cell, that the related information of the intra-frequency neighboring cell is not transmitted over the uplink HS-DPCCH.

If there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

Still further, the scheduling information includes: the related information of the intra-frequency neighboring cell and a highest priority logical channel identifier.

The first transmitter 032 may be specifically configured to:
transmit, by using one or several bit fields of a total E-DCH buffer status bit field, a highest priority logical channel buffer status bit field, and a UE power headroom bit field, the related information of the intra-frequency neighboring cell, where a highest priority logical channel identifier bit field is equal to a predefined or network-configured value.

Still further, the first transmitter 032 may further include:
configure, by means of predefinition or a network, a repetition period for transmitting the related information of the intra-frequency neighboring cell, and repeatedly transmit multiple pieces of same related information of the intra-frequency neighboring cell in the repetition period, so that a network side combines the multiple pieces of the same related information of the intra-frequency neighboring cell.

Further, as shown in FIG 10, the user equipment 03 further includes the first receiver 033, a first memory 034, and a bus 035. The first memory 034 is used to store a program 0341, so that the first processor reads the program 0341 from the first memory 034 and implements the method in Embodiments 1 and 3.

This embodiment of the present invention provides a user equipment for an uplink softer handover. Signal quality or signal strength of an intra-frequency neighboring cell is detected; if there is an intra-frequency neighboring cell whose signal quality or signal strength meets a first threshold, related information of the intra-frequency neighboring cell that meets the first threshold is reported, through a physical control channel or by using scheduling information, to a base station to which a user equipment belongs; then, a repetition period for transmitting the related information of the intra-frequency neighboring cell is configured by means of predefinition or a network, and multiple pieces of same related information of the intra-frequency neighboring cell are transmitted repeatedly in the repetition period, so that the base station combines the multiple pieces of the same related information of the intra-frequency neighboring cell. An uplink softer handover can be supported in a cell forward access channel state, thereby improving performance of a user equipment located on an edge of a cell, and meanwhile increasing processing efficiency of a base station.

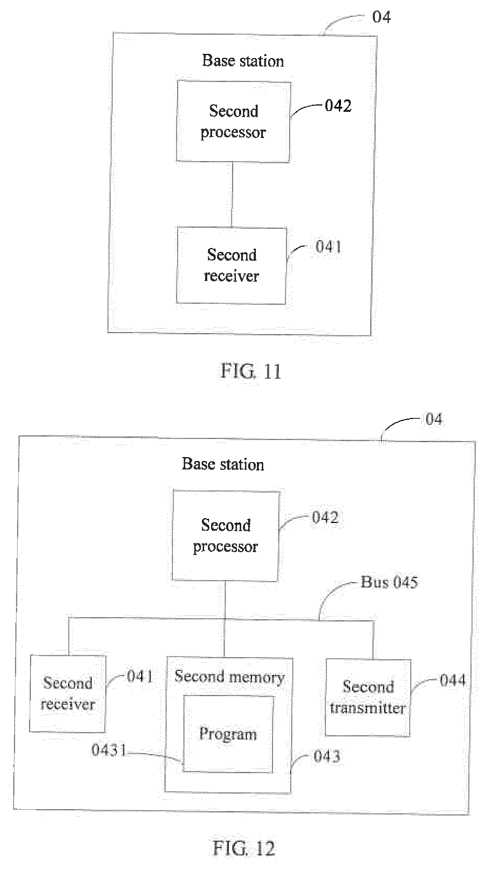

Embodiment 7 of the present invention further provides a base station 04, which is configured to implement the method in Embodiments 2 and 3, and as shown in FIG. 11, the base station 04 may include:
a second receiver 041, configured for the base station to receive related information of the intra-frequency neighboring cell, where the related information of the intra-frequency neighboring cell is reported by a user equipment through a physical control channel or by using scheduling information; and
a second processor 042, configured to acquire, according to the related information of the intra-frequency neighboring cell, an intra-frequency neighboring cell in which a softer handover can be performed.

The second processor 042 is further configured to combine uplink transmission of the user equipment that is received by a serving cell in which the user equipment is located and uplink transmission of the user equipment that is received by an intra-frequency neighboring cell of the serving cell in which the user equipment is located.

The related information of the intra-frequency neighboring cell includes:
an index of the intra-frequency neighboring cell, or indication information indicating that the intra-frequency neighboring cell supports a softer handover.

Before the intra-frequency neighboring cell in which a softer handover can be performed is acquired according to the related information of the intra-frequency neighboring cell, the second receiver 041 may be further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

Further, the index of the intra-frequency neighboring cell is determined according to the mapping relationship, configured by the radio network controller, between the intra-frequency neighboring cell and the index of the intra-frequency neighboring cell.

The indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

Further, the physical control channel that receives the user equipment may include an uplink dedicated physical control channel DPCCH, an uplink enhanced dedicated physical control channel E-DPCCH, or an uplink high-speed dedicated physical control channel HS-DPCCH.

Still further, when the physical control channel is an uplink DPCCH, information about the physical control channel includes: a pilot, a power control command word, and the related information of the intra-frequency neighboring cell.

The second receiver 041 may be specifically configured to:
the uplink DPCCH explicitly includes the related information of the intra-frequency neighboring cell directly: the related information of the intra-frequency neighboring cell is carried in a bit field for the related information of the intra-frequency neighboring cell; or
the uplink DPCCH implicitly includes the related information of the intra-frequency neighboring cell: the uplink DPCCH includes a pilot bit field and a power control command word bit field, where if one of the pilot bit field and the power control command bit field is a network-configured value or a predefined value, it is determined that the other bit field carries the related information of the intra-frequency neighboring cell; and if both the pilot bit field and the power control command word bit field are network-configured values or predefined values, a bit field except the pilot bit field and the power control command word bit field is used to carry the related information of the intra-frequency neighboring cell.

Still further, the second receiver 041 may be further configured to:
if a predefined code point or 1-bit indication information in the bit field for the related information of the intra-frequency neighboring cell is received, explicitly learn that the related information of the intra-frequency neighboring cell is not transmitted over the uplink DPCCH; or if a non-predefined or non-network-configured value that is transmitted in the pilot bit field and/or the power control command word bit field is received, implicitly learn that the related information of the intra-frequency neighboring cell is not transmitted over the uplink DPCCH.

If there is an intra-frequency neighboring cell whose signal quality or signal strength does not meet a first threshold, or if a base station to which the user equipment belongs has already received the related information of the intra-frequency neighboring cell that meets the first threshold, the base station to which the user equipment belongs does not receive the related information of the intra-frequency neighboring cell.

Further, when the physical control channel is an uplink E-DPCCH, the information about the physical control channel includes: an E-DPCCH transport format combination indicator, a retransmission sequence number or a new data indicator, happy bit information, and the related information of the intra-frequency neighboring cell.

The second receiver 041 may be specifically configured to:
the uplink E-DPCCH explicitly includes the related information of the intra-frequency neighboring cell directly: the related information of the intra-frequency neighboring cell is carried in a bit for the related information of the intra-frequency neighboring cell; or
the uplink E-DPCCH implicitly includes the related information of the intra-frequency neighboring cell: a coding format of the uplink E-DPCCH includes E-DPCCH transport format combination indicator information, retransmission sequence number information, and the happy bit information; where if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

Still further, the second receiver 041 may be further configured to:
if a predefined code point or 1-bit indication information in the bit field for the related information of the intra-frequency neighboring cell is received, explicitly learn that the related information of the intra-frequency neighboring cell is not transmitted over the uplink E-DPCCH; or if a non-predefined or non-network-configured value that is transmitted in an E-DPCCH transport format combination indicator bit field is received, implicitly learn that the related information of the intra-frequency neighboring cell is not transmitted over the uplink E-DPCCH.

If there is an intra-frequency neighboring cell whose signal quality or signal strength does not meet the first threshold, or if the base station to which the user equipment belongs has already received the related information of the intra-frequency neighboring cell that meets the first threshold, the base station to which the user equipment belongs does not receive the related information of the intra-frequency neighboring cell.

Still further, when the physical control channel is an uplink E-DPCCH and the information about the physical control channel includes the new data indicator, the new data indicator is 1-bit information.

Still further, when the physical control channel is an uplink HS-DPCCH, the information about the physical control channel includes an acknowledgment or a negative acknowledgment, channel quality information and/or precoding control information, and the related information of the intra-frequency neighboring cell.

A manner in which the information about the physical control channel includes the related information of the intra-frequency neighboring cell may include:
performing joint coding on the related information of the intra-frequency neighboring cell and the channel quality information and/or the precoding control information to form new 20-bit information.

Still further, the second receiver 041 may be configured to:
if a predefined code point in the bit field for the related information of the intra-frequency neighboring cell is received, learn, by using the code point, that the related information of the intra-frequency neighboring cell is not transmitted over the uplink HS-DPCCH.

If there is an intra-frequency neighboring cell whose signal quality or signal strength does not meet the first threshold, or if the base station to which the user equipment belongs has already received the related information of the intra-frequency neighboring cell that meets the first threshold, the base station to which the user equipment belongs does not receive the related information of the intra-frequency neighboring cell.

Still further, the scheduling information includes the related information of the intra-frequency neighboring cell and a highest priority logical channel identifier.

The second receiver 041 may be configured to:
when a highest priority logical channel identifier bit field in the received scheduling information is equal to a predefined or network-configured value, learn, by using one or several bit fields of a total E-DCH buffer status bit field, a highest priority logical channel buffer status bit field, and a UE power headroom bit field that are in the scheduling information, the related information of the intra-frequency neighboring cell.

Still further, the base station 04 may further include:
configure, by means of predefinition or a network, a repetition period for transmitting the related information of the intra-frequency neighboring cell, receive multiple pieces of same related information of the intra-frequency neighboring cell in the repetition period, and combine the multiple pieces of the same related information of the intra-frequency neighboring cell.

Still further, as shown in FIG 12, the base station 04 may further include: a second memory 043, a second transmitter 044, and a bus 045. The second memory 043 is used to store a program 0431, so that the second processor reads the program 0431 from the second memory 043 and implements the method in Embodiments 2 and 3.

This embodiment of the present invention provides a base station for an uplink softer handover. A user equipment detects signal quality or signal strength of an intra-frequency neighboring cell; if there is an intra-frequency neighboring cell whose signal quality or signal strength meets a first threshold, the user equipment reports, through a physical control channel or by using scheduling information, related information of the intra-frequency neighboring cell that meets the first threshold to a base station to which the user equipment belongs; the base station combines uplink transmission of the user equipment that is received by a serving cell in which the user equipment is located and uplink transmission of the user equipment that is received by an intra-frequency neighboring cell of the user equipment. An uplink softer handover can be supported in a cell forward access channel state, thereby improving performance of a user equipment located on an edge of a cell, and meanwhile increasing processing efficiency of a base station.

In the several embodiments provided in the present application, it should be understood that the disclosed device and method may be implemented in other manners. For example, the described device embodiment is merely exemplary. For example, the unit division is merely logical function division and may be other division in actual implementation. For example, multiple units or components may be combined or integrated into another system, or some features may be ignored or not performed. In addition, the displayed or discussed mutual connections may be implemented through some interfaces, and may be implemented in electronic, mechanical or other forms.

In addition, in the devices and systems of the embodiments of the present invention, functional units may be integrated into one processing unit, or each of the units may exist alone physically, or two or more units are integrated into one unit. The units may be implemented in a form of hardware, or may be implemented in a form of hardware in addition to a software functional unit.

All or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for an uplink softer handover, wherein the method comprises:
detecting, by a user equipment, signal quality or signal strength of an intra-frequency neighboring cell; and
if there is an intra-frequency neighboring cell whose signal quality or signal strength meets a first threshold, reporting, through a physical control channel or by using scheduling information, related information of the intra-frequency neighboring cell that meets the first threshold to a base station to which the user equipment belongs.

2. The method as claimed in claim 1, wherein the related information of the intra-frequency neighboring cell comprises:
an index of the intra-frequency neighboring cell, or indication information indicating that the intra-frequency neighboring cell supports a softer handover.

3. The method as claimed in claim 2, before the reporting, through a physical control channel or by using scheduling information, related information of the intra-frequency neighboring cell to a base station to which the user equipment belongs, further comprising:
receiving a mapping relationship, configured by a radio network controller, between the intra-frequency neighboring cell and the index of the intra-frequency neighboring cell; or
receiving a mapping relationship, configured by a radio network controller, between the intra-frequency neighboring cell and a transmission time unit in which the related information of the intra-frequency neighboring cell is transmitted.

4. The method as claimed in claim 3, wherein:
the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

5. The method as claimed in claim 1, wherein the first threshold comprises a network-configured or predefined downlink pilot signal quality or signal strength threshold of an intra-frequency neighboring cell.

6. The method as claimed in claim 1, wherein the physical control channel comprises an uplink dedicated physical control channel DPCCH, an uplink enhanced dedicated physical control channel E-DPCCH, or an uplink high-speed dedicated physical control channel HS-DPCCH.

7. The method as claimed in claim 6, wherein when the physical control channel is an uplink DPCCH, information about the physical control channel comprises: a pilot, a power control command word, and the related information of the intra-frequency neighboring cell; and
a manner in which the information about the physical control channel comprises the related information of the intra-frequency neighboring cell comprises:
explicitly comprising, by the uplink DPCCH, the related information of the intra-frequency neighboring cell directly: the related information of the intra-frequency neighboring cell is carried in a bit field for the related information of the intra-frequency neighboring cell; or
implicitly comprising, by the uplink DPCCH, the related information of the intra-frequency neighboring cell: the uplink DPCCH comprises a pilot bit field and a power control command word bit field, wherein if one bit field of the pilot bit field and the power control command bit field is a network-configured value or a predefined value, it is determined that the other bit field carries the related information of the intra-frequency neighboring cell; and
if both the pilot bit field and the power control command word bit field are network-configured values or predefined values, a bit field except the pilot bit field and the power control command word bit field is used to carry the related information of the intra-frequency neighboring cell.

8. The method as claimed in claim 7, comprising:
when the related information of the intra-frequency neighboring cell is not reported, explicitly indicating, by using a predefined code point or 1-bit indication information in the bit field for the related information of the intra-frequency neighboring cell, that the related information of the intra-frequency neighboring cell is not transmitted over the uplink DPCCH; or implicitly indicating, by using a non-predefined or non-network-configured value that is transmitted in the pilot bit field and/or the power control command word bit field, that the related information of the intra-frequency neighboring cell is not transmitted over the uplink DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

9. The method as claimed in claim 6, wherein when the physical control channel is an uplink E-DPCCH, information about the physical control channel comprises: an E-DPCCH transport format combination indicator, a retransmission sequence number or a new data indicator, happy bit information, and the related information of the intra-frequency neighboring cell; and
a manner in which the information about the physical control channel comprises the related information of the intra-frequency neighboring cell comprises:
explicitly comprising, by the uplink E-DPCCH, the related information of the intra-frequency neighboring cell directly: the related information of the intra-frequency neighboring cell is carried in a bit for the related information of the intra-frequency neighboring cell; or
implicitly comprising, by the uplink E-DPCCH, the related information of the intra-frequency neighboring cell: a coding format of the uplink E-DPCCH comprises E-DPCCH transport format combination indicator information, retransmission sequence number information, and the happy bit information, wherein if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

10. The method as claimed in claim 9, comprising:
when the related information of the intra-frequency neighboring cell is not reported, explicitly indicating, by using a predefined code point or 1-bit indication information in the bit field for the related information of the intra-frequency neighboring cell, that the related information of the intra-frequency neighboring cell is not transmitted over the uplink E-DPCCH; or implicitly indicating, by using a non-predefined or non-network-configured value that is transmitted in a bit field for the E-DPCCH transmission format combination indicator, that the related information of the intra-frequency neighboring cell is not transmitted over the uplink E-DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

11. The method as claimed in claim 9, wherein when the physical control channel is an uplink E-DPCCH and the information about the physical control channel comprises the new data indicator, the new data indicator is 1-bit information.

12. The method as claimed in claim 6, wherein when the physical control channel is an uplink HS-DPCCH, information about the physical control channel comprises:
an acknowledgment or a negative acknowledgment, channel quality information and/or precoding control information, and the related information of the intra-frequency neighboring cell; and
a manner in which the information about the physical control channel comprises the related information of the intra-frequency neighboring cell comprises: performing joint coding on the related information of the intra-frequency neighboring cell and the channel quality information and/or the precoding control information to form new 20-bit information.

13. The method as claimed in claim 12, comprising:
when the related information of the intra-frequency neighboring cell is not reported, indicating, by using a predefined code point in the bit field for the related information of the intra-frequency neighboring cell, that the related information of the intra-frequency neighboring cell is not transmitted over the uplink HS-DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

14. The method as claimed in claim 1, wherein the scheduling information comprises the related information of the intra-frequency neighboring cell and a highest priority logical channel identifier; and
the reporting, by using scheduling information, related information of the intra-frequency neighboring cell to a base station to which the user equipment belongs comprises:
transmitting, by using one or several bit fields of a total E-DCH buffer status bit field, a highest priority logical channel buffer status bit field, and a UE power headroom bit field, the related information of the intra-frequency neighboring cell, wherein a highest priority logical channel identifier bit field is equal to a predefined or network-configured value.

15. The method as claimed in claims 1 to 14, wherein the method further comprises:
configuring, by means of predefinition or a network, a repetition period for transmitting the related information of the intra-frequency neighboring cell, and repeatedly transmitting multiple pieces of same related information of the intra-frequency neighboring cell in the repetition period, so that the base station combines the multiple pieces of the same related information of the intra-frequency neighboring cell.

16. A method for an uplink softer handover, comprising:
receiving, by a base station, related information of an intra-frequency neighboring cell, wherein the related information of the intra-frequency neighboring cell is reported by a user equipment through a physical control channel or by using scheduling information;
acquiring, according to the related information of the intra-frequency neighboring cell, an intra-frequency neighboring cell in which a softer handover can be performed; and
combining uplink transmission data of the user equipment that is received by a serving cell in which the user equipment is located and uplink transmission data of the user equipment that is received by an intra-frequency neighboring cell of the serving cell in which the user equipment is located.

17. The method as claimed in claim 16, wherein the related information of the intra-frequency neighboring cell comprises:
an index of the intra-frequency neighboring cell, or indication information indicating that the intra-frequency neighboring cell supports a softer handover.

18. The method as claimed in claim 17, before the acquiring, according to the related information of the intra-frequency neighboring cell, an intra-frequency neighboring cell in which a softer handover can be performed, further comprising:
receiving a mapping relationship, configured by a radio network controller, between the intra-frequency neighboring cell and the index of the intra-frequency neighboring cell; or
receiving a mapping relationship, configured by a radio network controller, between the intra-frequency neighboring cell and a transmission time unit in which the related information of the intra-frequency neighboring cell is transmitted.

19. The method as claimed in claim 18, wherein:
the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

20. The method as claimed in claim 16, wherein the physical control channel that receives the user equipment comprises an uplink dedicated physical control channel DPCCH, an uplink enhanced dedicated physical control channel E-DPCCH, or an uplink high-speed dedicated physical control channel HS-DPCCH.

21. The method as claimed in claim 20, wherein when the physical control channel is an uplink DPCCH, information about the physical control channel comprises: a pilot, a power control command word, and the related information of the intra-frequency neighboring cell; and
a manner in which the information about the physical control channel comprises the related information of the intra-frequency neighboring cell comprises:
explicitly comprising, by the uplink DPCCH, the related information of the intra-frequency neighboring cell directly: the related information of the intra-frequency neighboring cell is carried in a bit field for the related information of the intra-frequency neighboring cell; or
implicitly comprising, by the uplink DPCCH, the related information of the intra-frequency neighboring cell: the uplink DPCCH comprises a pilot bit field and a power control command word bit field, wherein if one bit field of the pilot bit field and the power control command bit field is a network-configured value or a predefined value, it is determined that the other bit field carries the related information of the intra-frequency neighboring cell; and if both the pilot bit field and the power control command word bit field are network-configured values or predefined values, a bit field except the pilot bit field and the power control command word bit field is used to carry the related information of the intra-frequency neighboring cell.

22. The method as claimed in claim 21, comprising:
if a predefined code point or 1-bit indication information in the bit field for the related information of the intra-frequency neighboring cell is received, explicitly learning that the related information of the intra-frequency neighboring cell is not transmitted over the uplink DPCCH; or if a non-predefined or non-network-configured value that is transmitted in the pilot bit field and/or the power control command word bit field is received, implicitly learning that the related information of the intra-frequency neighboring cell is not transmitted over the uplink DPCCH; wherein
if there is an intra-frequency neighboring cell whose signal quality or signal strength does not meet a first threshold, or if a base station to which the user equipment belongs has already received the related information of the intra-frequency neighboring cell that meets a first threshold, the base station to which the user equipment belongs does not receive the related information of the intra-frequency neighboring cell.

23. The method as claimed in claim 20, wherein when the physical control channel is an uplink E-DPCCH, information about the physical control channel comprises: an E-DPCCH transport format combination indicator, a retransmission sequence number or a new data indicator, happy bit information, and the related information of the intra-frequency neighboring cell; and
a manner in which the information about the physical control channel comprises the related information of the intra-frequency neighboring cell comprises:
explicitly comprising, by the uplink E-DPCCH, the related information of the intra-frequency neighboring cell directly: the related information of the intra-frequency neighboring cell is carried in a bit for the related information of the intra-frequency neighboring cell; or
implicitly comprising, by the uplink E-DPCCH, the related information of the intra-frequency neighboring cell: a coding format of the uplink E-DPCCH comprises E-DPCCH transport format combination indicator information, retransmission sequence number information, and the happy bit information, wherein if one information bit of the E-DPCCH transport format combination indicator information, the retransmission sequence number information, and the happy bit information is a predefined value or a network-configured value, it is determined that the other two information bits carry the related information of the intra-frequency neighboring cell; or if two information bits of the E-DPCCH transport format combination indicator information, the retransmission sequence number information, and the happy bit information are predefined values or network-configured values, it is determined that the other information bit carries the related information of the intra-frequency neighboring cell.

24. The method as claimed in claim 23, comprising:
if a predefined code point or 1-bit indication information in the bit field for the related information of the intra-frequency neighboring cell is received, explicitly learning that the related information of the intra-frequency neighboring cell is not transmitted over the uplink E-DPCCH; or if a non-predefined or non-network-configured value that is transmitted in the E-DPCCH transport format combination indicator bit field is received, implicitly learning that the related information of the intra-frequency neighboring cell is not transmitted over the uplink E-DPCCH; wherein
if there is an intra-frequency neighboring cell whose signal quality or signal strength does not meet a first threshold, or if a base station to which the user equipment belongs has already received the related information of the intra-frequency neighboring cell that meets a first threshold, the base station to which the user equipment belongs does not receive the related information of the intra-frequency neighboring cell.

25. The method as claimed in claim 23, wherein when the physical control channel is an uplink E-DPCCH and the information about the physical control channel comprises the new data indicator, the new data indicator is 1-bit information.

26. The method as claimed in claim 20, wherein when the physical control channel is an uplink HS-DPCCH, information about the physical control channel comprises: an acknowledgment or a negative acknowledgment, channel quality information and/or precoding control information, and the related information of the intra-frequency neighboring cell; and
a manner in which the information about the physical control channel comprises the related information of the intra-frequency neighboring cell comprises:
performing joint coding on the related information of the intra-frequency neighboring cell and the channel quality information and/or the precoding control information to form new 20-bit information.

27. The method as claimed in claim 26, comprising:
if a predefined code point in the bit field for the related information of the intra-frequency neighboring cell is received, learning, by using the code point, that the related information of the intra-frequency neighboring cell is not transmitted over the uplink HS-DPCCH; wherein
if there is an intra-frequency neighboring cell whose signal quality or signal strength does not meet a first threshold, or if a base station to which the user equipment belongs has already received the related information of the intra-frequency neighboring cell that meets a first threshold, the base station to which the user equipment belongs does not receive the related information of the intra-frequency neighboring cell.

28. The method as claimed in claim 16, wherein the scheduling information comprises the related information of the intra-frequency neighboring cell and a highest priority logical channel identifier; and
the receiving related information of an intra-frequency neighboring cell, wherein the related information of the intra-frequency neighboring cell is reported by a user equipment by using scheduling information comprises:
when a highest priority logical channel identifier bit field in the received scheduling information is equal to a predefined or network-configured value, learning, by using one or several bit fields of a total E-DCH buffer status bit field, a highest priority logical channel buffer status bit field, and a UE power headroom bit field that are in the scheduling information, the related information of the intra-frequency neighboring cell.

29. The method as claimed in any one of claims 16 to 28, wherein the method further comprises:
configuring, by means of predefinition or a network, a repetition period for transmitting the related information of the intra-frequency neighboring cell, receiving multiple pieces of same related information of the intra-frequency neighboring cell in the repetition period, and combining the multiple pieces of the same related information of the intra-frequency neighboring cell.

30. A user equipment, comprising:
a detecting unit, configured for the user equipment to detect signal quality or signal strength of an intra-frequency neighboring cell and send the signal quality or signal strength of the intra-frequency neighboring cell to an information reporting unit; and
the information reporting unit, configured to receive the signal quality or signal strength of the intra-frequency neighboring cell from the detecting unit, and if there is an intra-frequency neighboring cell whose signal quality or signal strength meets a first threshold, report, through a physical control channel or by using scheduling information, related information of the intra-frequency neighboring cell that meets the first threshold to a base station to which the user equipment belongs.

31. The user equipment as claimed in claim 30, wherein the related information of the intra-frequency neighboring cell comprises:
an index of the intra-frequency neighboring cell, or indication information indicating that the intra-frequency neighboring cell supports a softer handover.

32. The user equipment as claimed in claim 31, wherein before the information reporting unit reports, through the physical control channel or by using the scheduling information, the related information of the intra-frequency neighboring cell to the base station to which the user equipment belongs, the information reporting unit is further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

33. The user equipment as claimed in claim 32, wherein:
the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

34. The user equipment as claimed in claim 30, wherein the first threshold comprises a network-configured or predefined downlink pilot signal quality or signal strength threshold of an intra-frequency neighboring cell.

35. The user equipment as claimed in claim 30, wherein the physical control channel comprises an uplink dedicated physical control channel DPCCH, an uplink enhanced dedicated physical control channel E-DPCCH, or an uplink high-speed dedicated physical control channel HS-DPCCH.

36. The user equipment as claimed in claim 35, wherein when the physical control channel is an uplink DPCCH, information about the physical control channel comprises: pilot information, power control command word information, and the related information of the intra-frequency neighboring cell; and
the information reporting unit is specifically configured to:
the uplink DPCCH explicitly comprises the related information of the intra-frequency neighboring cell directly: add the related information of the intra-frequency neighboring cell to a bit field for the related information of the intra-frequency neighboring cell; or
the uplink DPCCH implicitly comprises the related information of the intra-frequency neighboring cell: a format of the uplink DPCCH comprises a pilot bit field and a power control command word bit field, wherein if one of the pilot bit field and the power control command bit field is a predefined or network-configured value, it is determined that the other bit field carries the related information of the intra-frequency neighboring cell; and if both the pilot bit field and the power control command word bit field are predefined or network-configured values, a bit field except the pilot bit field and the power control command word bit field is used to carry the related information of the intra-frequency neighboring cell.

37. The user equipment as claimed in claim 36, wherein the information reporting unit comprises:
an indicating unit, configured to: when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink DPCCH; or implicitly indicate, by using a non-predefined or non-network-configured value that is transmitted in the pilot bit field and/or the power control command word bit field, that the related information of the intra-frequency neighboring cell is not transmitted over the uplink DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

38. The user equipment as claimed in claim 35, wherein when the physical control channel is an uplink E-DPCCH, information about the physical control channel comprises: an E-DPCCH transport format combination indicator, a retransmission sequence number or a new data indicator, happy bit information, and the related information of the intra-frequency neighboring cell; and
the information reporting unit is specifically configured to:
the uplink E-DPCCH explicitly comprises the related information of the intra-frequency neighboring cell directly: add the related information of the intra-frequency neighboring cell to a bit for the related information of the intra-frequency neighboring cell; or
the uplink E-DPCCH implicitly comprises the related information of the intra-frequency neighboring cell: a coding format of the uplink E-DPCCH comprises E-DPCCH transport format combination indicator information, retransmission sequence number information, and the happy bit information; wherein if one information bit of the E-DPCCH transport format combination indicator information, the retransmission sequence number information, and the happy bit information is a predefined value or a network-configured value, determine that the other two information bits carry the related information of the intra-frequency neighboring cell; or if two information bits of the E-DPCCH transport format combination indicator information, the retransmission sequence number information, and the happy bit information are predefined values or network-configured values, determine that the other information bit carries the related information of the intra-frequency neighboring cell.

39. The user equipment as claimed in claim 38, comprising:
the indicating unit is further configured to, when the related information of the intra-frequency neighboring cell is not reported, explicitly indicate, by using a predefined code point or 1-bit indication information in a bit field for the related information of the intra-frequency neighboring cell, that the related information of the intra-frequency neighboring cell is not transmitted over the uplink E-DPCCH; or implicitly indicate, by using a non-predefined or non-network-configured value that is transmitted in a bit field for the E-DPCCH transmission format combination indicator, that the related information of the intra-frequency neighboring cell is not transmitted over the uplink E-DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

40. The user equipment as claimed in claim 38, wherein when the physical control channel is an uplink E-DPCCH and the information about the physical control channel comprises the new data indicator, the new data indicator is 1-bit information.

41. The user equipment as claimed in claim 35, wherein when the physical control channel is an uplink HS-DPCCH, information about the physical control channel comprises: an acknowledgment or a negative acknowledgment, channel quality information and/or precoding control information, and the related information of the intra-frequency neighboring cell; and
the information reporting unit further comprises:
a coding unit, configured to perform joint coding on the related information of the intra-frequency neighboring cell and the channel quality information and/or the precoding control information to form new 20-bit information.

42. The user equipment as claimed in claim 35, comprising:
an indicating unit, further configured to, when the related information of the intra-frequency neighboring cell is not reported, indicate, by using a predefined code point in a bit field for the related information of the intra-frequency neighboring cell, that the related information of the intra-frequency neighboring cell is not transmitted over the uplink HS-DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

43. The user equipment as claimed in claim 30, wherein the scheduling information comprises: the related information of the intra-frequency neighboring cell and a highest priority logical channel identifier; and
the information reporting unit is specifically configured to:
transmit, by using one or several bit fields of a total E-DCH buffer status bit field, a highest priority logical channel buffer status bit field, and a UE power headroom bit field, the related information of the intra-frequency neighboring cell, wherein a highest priority logical channel identifier bit field is equal to a predefined or network-configured value.

44. The user equipment as claimed in claims 30 to 43, further comprising:
a repeated transmission unit, configured to configure, by means of predefinition or a network, a repetition period for transmitting the related information of the intra-frequency neighboring cell, and repeatedly transmit multiple pieces of same related information of the intra-frequency neighboring cell in the repetition period, so that the base station combines the multiple pieces of the same related information of the intra-frequency neighboring cell.

45. A base station, comprising:
a receiving unit, configured for the base station to receive related information of an intra-frequency neighboring cell, wherein the related information of the intra-frequency neighboring cell is reported by a user equipment through a physical control channel or by using scheduling information;
an acquiring unit, configured to acquire, according to the related information of the intra-frequency neighboring cell, an intra-frequency neighboring cell in which a softer handover can be performed; and
a data combining unit, configured to combine uplink transmission data of the user equipment that is received by a serving cell in which the user equipment is located and uplink transmission data of the user equipment that is received by an intra-frequency neighboring cell of the serving cell in which the user equipment is located.

46. The method as claimed in claim 45, wherein the related information of the intra-frequency neighboring cell comprises:
an index of the intra-frequency neighboring cell, or indication information indicating that the intra-frequency neighboring cell supports a softer handover.

47. The method as claimed in claim 46, wherein before the intra-frequency neighboring cell in which a softer handover can be performed is acquired according to the related information of the intra-frequency neighboring cell, the receiving unit is further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

48. The method as claimed in claim 47, wherein:
the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

49. The base station as claimed in claim 45, wherein the physical control channel that receives the user equipment comprises an uplink dedicated physical control channel DPCCH, an uplink enhanced dedicated physical control channel E-DPCCH, or an uplink high-speed dedicated physical control channel HS-DPCCH.

50. The base station as claimed in claim 49, wherein when the physical control channel is an uplink DPCCH, information about the physical control channel comprises: a pilot, a power control command word, and the related information of the intra-frequency neighboring cell; and
the receiving unit is specifically configured to:
the uplink DPCCH explicitly comprises the related information of the intra-frequency neighboring cell directly: add the related information of the intra-frequency neighboring cell to a bit field for the related information of the intra-frequency neighboring cell; or
the uplink DPCCH implicitly comprises the related information of the intra-frequency neighboring cell: the uplink DPCCH comprises a pilot bit field and a power control command word bit field, wherein if one bit field of the pilot bit field and the power control command bit field is a network-configured value or a predefined value, determine that the other bit field carries the related information of the intra-frequency neighboring cell; and if both the pilot bit field and the power control command word bit field are network-configured values or predefined values, add the related information of the intra-frequency neighboring cell to a bit field except the pilot bit field and the power control command word bit field.

51. The base station as claimed in claim 50, wherein the receiving unit is further configured to:
if a predefined code point or 1-bit indication information in the bit field for the related information of the intra-frequency neighboring cell is received, explicitly learn that the related information of the intra-frequency neighboring cell is not transmitted over the uplink DPCCH; or if a non-predefined or non-network-configured value that is transmitted in the pilot bit field and/or the power control command word bit field is received, implicitly learn that the related information of the intra-frequency neighboring cell is not transmitted over the uplink DPCCH; wherein
if there is an intra-frequency neighboring cell whose signal quality or signal strength does not meet a first threshold, or if a base station to which the user equipment belongs has already received the related information of the intra-frequency neighboring cell that meets a first threshold, the base station to which the user equipment belongs does not receive the related information of the intra-frequency neighboring cell.

52. The base station as claimed in claim 49, wherein when the physical control channel is an uplink E-DPCCH, information about the physical control channel comprises: an E-DPCCH transport format combination indicator, a retransmission sequence number or a new data indicator, happy bit information, and the related information of the intra-frequency neighboring cell; and
the receiving unit is specifically configured to:
the uplink E-DPCCH explicitly comprises the related information of the intra-frequency neighboring cell directly: add the related information of the intra-frequency neighboring cell to a bit for the related information of the intra-frequency neighboring cell; or
the uplink E-DPCCH implicitly comprises the related information of the intra-frequency neighboring cell: a coding format of the uplink E-DPCCH comprises E-DPCCH transport format combination indicator information, retransmission sequence number information, and the happy bit information; wherein if one information bit of the E-DPCCH transport format combination indicator information, the retransmission sequence number information, and the happy bit information is a predefined value or a network-configured value, determine that the other two information bits carry the related information of the intra-frequency neighboring cell; or if two information bits of the E-DPCCH transport format combination indicator information, the retransmission sequence number information, and the happy bit information are predefined values or network-configured values, determine that the other information bit carries the related information of the intra-frequency neighboring cell.

53. The base station as claimed in claim 52, wherein the receiving unit is further configured to:
if a predefined code point or 1-bit indication information in the bit field for the related information of the intra-frequency neighboring cell is received, explicitly learn that the related information of the intra-frequency neighboring cell is not transmitted over the uplink E-DPCCH; or if a non-predefined or non-network-configured value that is transmitted in the E-DPCCH transport format combination indicator bit field is received, implicitly learn that the related information of the intra-frequency neighboring cell is not transmitted over the uplink E-DPCCH; wherein
if there is an intra-frequency neighboring cell whose signal quality or signal strength does not meet a first threshold, or if a base station to which the user equipment belongs has already received the related information of the intra-frequency neighboring cell that meets the first threshold, the base station to which the user equipment belongs does not receive the related information of the intra-frequency neighboring cell.

54. The base station as claimed in claim 52, wherein when the physical control channel is an uplink E-DPCCH and the information about the physical control channel comprises the new data indicator, the new data indicator is 1-bit information.

55. The base station as claimed in claim 49, wherein when the physical control channel is an uplink HS-DPCCH, information about the physical control channel comprises: an acknowledgment or a negative acknowledgment, channel quality information and/or precoding control information, and the related information of the intra-frequency neighboring cell; and
a manner in which the information about the physical control channel comprises the related information of the intra-frequency neighboring cell comprises:
performing joint coding on the related information of the intra-frequency neighboring cell and the channel quality information and/or the precoding control information to form new 20-bit information.

56. The base station as claimed in claim 55, wherein the receiving unit is configured to:
if a predefined code point in a bit field for the related information of the intra-frequency neighboring cell is received, learn, by using the code point, that the related information of the intra-frequency neighboring cell is not transmitted over the uplink HS-DPCCH; wherein
if there is an intra-frequency neighboring cell whose signal quality or signal strength does not meet a first threshold, or if a base station to which the user equipment belongs has already received the related information of the intra-frequency neighboring cell that meets a first threshold, the base station to which the user equipment belongs does not receive the related information of the intra-frequency neighboring cell.

57. The base station as claimed in claim 45, wherein the scheduling information comprises the related information of the intra-frequency neighboring cell and a highest priority logical channel identifier; and
the receiving unit is configured to:
when a highest priority logical channel identifier bit field in the received scheduling information is equal to a predefined or network-configured value, learn, by using one or several bit fields of a total E-DCH buffer status bit field, a highest priority logical channel buffer status bit field, and a UE power headroom bit field that are in the scheduling information, the related information of the intra-frequency neighboring cell.

58. The base station as claimed in any one of claims 45 to 57, further comprising:
the base station is further configure, by means of predefinition or a network, a repetition period for transmitting the related information of the intra-frequency neighboring cell, receive multiple pieces of same related information of the intra-frequency neighboring cell in the repetition period, and combine the multiple pieces of the same related information of the intra-frequency neighboring cell.

59. A user equipment, comprising:
a first processor, configured for the user equipment to detect signal quality or signal strength of an intra-frequency neighboring cell and send the signal quality or signal strength of the intra-frequency neighboring cell to a first transmitter; and
the first transmitter, configured to receive the signal quality or signal strength of the intra-frequency neighboring cell from the first processor, and if there is an intra-frequency neighboring cell whose signal quality or signal strength meets a first threshold, report, through a physical control channel or by using scheduling information, related information of the intra-frequency neighboring cell that meets the first threshold to a base station to which the user equipment belongs.

60. The user equipment as claimed in claim 59, wherein the related information of the intra-frequency neighboring cell comprises:
an index of the intra-frequency neighboring cell, or indication information indicating that the intra-frequency neighboring cell supports a softer handover.

61. The user equipment as claimed in claim 60, wherein the user equipment further comprises:
a first receiver, configured to, before the related information of the intra-frequency neighboring cell is reported, through the physical control channel or by using the scheduling information, to the base station to which the user equipment belongs,
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

62. The user equipment as claimed in claim 61, wherein:
the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

63. The user equipment as claimed in claim 59, wherein the first threshold comprises a network-configured or predefined downlink pilot signal quality or signal strength threshold of an intra-frequency neighboring cell.

64. The user equipment as claimed in claim 59, wherein the physical control channel comprises an uplink dedicated physical control channel DPCCH, an uplink enhanced dedicated physical control channel E-DPCCH, or an uplink high-speed dedicated physical control channel HS-DPCCH.

65. The user equipment as claimed in claim 64, wherein when the physical control channel is an uplink DPCCH, information about the physical control channel comprises: pilot information, power control command word information, and the related information of the intra-frequency neighboring cell; and
the first transmitter is specifically configured to:
the uplink DPCCH explicitly comprises the related information of the intra-frequency neighboring cell directly: add the related information of the intra-frequency neighboring cell to a bit field for the related information of the intra-frequency neighboring cell; or
the uplink DPCCH implicitly comprises the related information of the intra-frequency neighboring cell: a format of the uplink DPCCH comprises a pilot bit field and a power control command word bit field, wherein if one of the pilot bit field and the power control command bit field is a network-configured value, determine that the other bit field carries the related information of the intra-frequency neighboring cell; and if both the pilot bit field and the power control command word bit field are predefined or network-configured values, add the related information of the intra-frequency neighboring cell to a bit field except the pilot bit field and the power control command word bit field.

66. The user equipment as claimed in claim 65, wherein the first transmitter is further configured to:
when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink DPCCH; or implicitly indicate, by using a non-predefined or non-network-configured value that is transmitted in the pilot bit field and/or the power control command word bit field, that the related information of the intra-frequency neighboring cell is not transmitted over the uplink DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

67. The user equipment as claimed in claim 64, wherein when the physical control channel is an uplink E-DPCCH, information about the physical control channel comprises: an E-DPCCH transport format combination indicator, a retransmission sequence number or a new data indicator, happy bit information, and the related information of the intra-frequency neighboring cell; and
the first transmitter is specifically configured to:
the uplink E-DPCCH explicitly comprises the related information of the intra-frequency neighboring cell directly: add the related information of the intra-frequency neighboring cell to a bit for the related information of the intra-frequency neighboring cell; or
the uplink E-DPCCH implicitly comprises the related information of the intra-frequency neighboring cell: a coding format of the uplink E-DPCCH comprises E-DPCCH transport format combination indicator information, retransmission sequence number information, and the happy bit information; wherein if one information bit of the E-DPCCH transport format combination indicator information, the retransmission sequence number information, and the happy bit information is a predefined value or a network-configured value, determine that the other two information bits carry the related information of the intra-frequency neighboring cell; or if two information bits of the E-DPCCH transport format combination indicator information, the retransmission sequence number information, and the happy bit information are predefined values or network-configured values, determine that the other information bit carries the related information of the intra-frequency neighboring cell.

68. The user equipment as claimed in claim 67, wherein the first transmitter is further configured to:
when the related information of the intra-frequency neighboring cell is not reported, explicitly indicate, by using a predefined code point or 1-bit indication information in the bit field for the related information of the intra-frequency neighboring cell, that the related information of the intra-frequency neighboring cell is not transmitted over the uplink E-DPCCH; or implicitly indicate, by using a non-predefined or non-network-configured value that is transmitted in a bit field for the E-DPCCH transmission format combination indicator, that the related information of the intra-frequency neighboring cell is not transmitted over the uplink E-DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

69. The user equipment as claimed in claim 67, wherein when the physical control channel is an uplink E-DPCCH and the information about the physical control channel comprises the new data indicator, the new data indicator is 1-bit information.

70. The user equipment as claimed in claim 64, wherein when the physical control channel is an uplink HS-DPCCH, information about the physical control channel comprises an acknowledgment or a negative acknowledgment, channel quality information and/or precoding control information, and the related information of the intra-frequency neighboring cell; and
the first transmitter is specifically configured to:
perform joint coding on the related information of the intra-frequency neighboring cell and the channel quality information and/or the precoding control information to form new 20-bit information.

71. The user equipment as claimed in claim 70, wherein the first transmitter is further configured to:
when the related information of the intra-frequency neighboring cell is not reported, indicate, by using a predefined code point in the bit field for the related information of the intra-frequency neighboring cell, that the related information of the intra-frequency neighboring cell is not transmitted over the uplink HS-DPCCH; wherein
if there is an intra-frequency neighboring cell whose signal quality or signal strength does not meet the first threshold, or if the related information of the intra-frequency neighboring cell that meets the first threshold has already been reported to the base station to which the user equipment belongs, the related information of the intra-frequency neighboring cell is not reported to the base station to which the user equipment belongs.

72. The user equipment as claimed in claim 59, wherein the scheduling information comprises: the related information of the intra-frequency neighboring cell and a highest priority logical channel identifier; and
the first transmitter is specifically configured to:
transmit, by using one or several bit fields of a total E-DCH buffer status bit field, a highest priority logical channel buffer status bit field, and a UE power headroom bit field, the related information of the intra-frequency neighboring cell, wherein a highest priority logical channel identifier bit field is equal to a predefined or network-configured value.

73. The user equipment as claimed in any one of claims 59 to 72, wherein the first transmitter further comprises:
configure, by means of predefinition or a network, a repetition period for transmitting the related information of the intra-frequency neighboring cell, and repeatedly transmit multiple pieces of same related information of the intra-frequency neighboring cell in the repetition period, so that the base station combines the multiple pieces of the same related information of the intra-frequency neighboring cell.

74. A base station, comprising:
a second receiver, configured for the base station to receive related information of an intra-frequency neighboring cell, wherein the related information of the intra-frequency neighboring cell is reported by a user equipment through a physical control channel or by using scheduling information; and
a second processor, configured to acquire, according to the related information of the intra-frequency neighboring cell, an intra-frequency neighboring cell in which a softer handover can be performed; wherein
the second processor is further configured to combine uplink transmission data of the user equipment that is received by a serving cell in which the user equipment is located and uplink transmission data of the user equipment that is received by an intra-frequency neighboring cell of the serving cell in which the user equipment is located.

75. The base station as claimed in claim 74, wherein the related information of the intra-frequency neighboring cell comprises:
an index of the intra-frequency neighboring cell, or indication information indicating that the intra-frequency neighboring cell supports a softer handover.

76. The base station as claimed in claim 75, wherein before the intra-frequency neighboring cell in which a softer handover can be performed is acquired according to the related information of the intra-frequency neighboring cell, the second receiver is further configured to:
receive a mapping relationship, configured by a radio network controller, between the intra-frequency neighboring cell and the index of the intra-frequency neighboring cell; or
receive a mapping relationship, configured by a radio network controller, between the intra-frequency neighboring cell and a transmission time unit in which the related information of the intra-frequency neighboring cell is transmitted.

77. The base station as claimed in claim 76, wherein:
the index of the intra-frequency neighboring cell is determined according to the mapping relationship, configured by the radio network controller, between the intra-frequency neighboring cell and the index of the intra-frequency neighboring cell; and
the indication information indicating that the intra-frequency neighboring cell supports a softer handover is determined according to the mapping relationship, configured by the radio network controller, between the intra-frequency neighboring cell and the transmission time unit in which the related information of the intra-frequency neighboring cell is transmitted.

78. The base station as claimed in claim 74, wherein the physical control channel that receives the user equipment comprises an uplink dedicated physical control channel DPCCH, an uplink enhanced dedicated physical control channel E-DPCCH, or an uplink high-speed dedicated physical control channel HS-DPCCH.

79. The base station as claimed in claim 78, wherein when the physical control channel is an uplink DPCCH, information about the physical control channel comprises: a pilot, a power control command word, and the related information of the intra-frequency neighboring cell; and
the second receiver is specifically configured to:
the uplink DPCCH explicitly comprises the related information of the intra-frequency neighboring cell directly: add the related information of the intra-frequency neighboring cell to a bit field for the related information of the intra-frequency neighboring cell; or
the uplink DPCCH implicitly comprises the related information of the intra-frequency neighboring cell: the uplink DPCCH comprises a pilot bit field and a power control command word bit field, wherein if one bit field of the pilot bit field and the power control command bit field is a network-configured value or a predefined value, determine that the other bit field carries the related information of the intra-frequency neighboring cell; and if both the pilot bit field and the power control command word bit field are network-configured values or predefined values, add the related information of the intra-frequency neighboring cell to a bit field except the pilot bit field and the power control command word bit field.

80. The base station as claimed in claim 79, wherein the second receiver is further configured to:
if a predefined code point or 1-bit indication information in the bit field for the related information of the intra-frequency neighboring cell is received, explicitly learn that the related information of the intra-frequency neighboring cell is not transmitted over the uplink DPCCH; or if a non-predefined or non-network-configured value that is transmitted in the pilot bit field and/or the power control command word bit field is received, implicitly learn that the related information of the intra-frequency neighboring cell is not transmitted over the uplink DPCCH; wherein
if there is an intra-frequency neighboring cell whose signal quality or signal strength does not meet a first threshold, or if a base station to which the user equipment belongs has already received the related information of the intra-frequency neighboring cell that meets a first threshold, the base station to which the user equipment belongs does not receive the related information of the intra-frequency neighboring cell.

81. The base station as claimed in claim 78, wherein when the physical control channel is an uplink E-DPCCH, information about the physical control channel comprises: an E-DPCCH transport format combination indicator, a retransmission sequence number or a new data indicator, happy bit information, and the related information of the intra-frequency neighboring cell; and
the second receiver is specifically configured to:
the uplink E-DPCCH explicitly comprises the related information of the intra-frequency neighboring cell directly: the related information of the intra-frequency neighboring cell is carried in a bit for the related information of the intra-frequency neighboring cell; or
the uplink E-DPCCH implicitly comprises the related information of the intra-frequency neighboring cell: a coding format of the uplink E-DPCCH comprises E-DPCCH transport format combination indicator information, retransmission sequence number information, and the happy bit information; wherein if one information bit of the E-DPCCH transport format combination indicator information, the retransmission sequence number information, and the happy bit information is a predefined value or a network-configured value, determine that the other two information bits carry the related information of the intra-frequency neighboring cell; or if two information bits of the E-DPCCH transport format combination indicator information, the retransmission sequence number information, and the happy bit information are predefined values or network-configured values, determine that the other information bit carries the related information of the intra-frequency neighboring cell.

82. The base station as claimed in claim 81, wherein the second receiver is further configured to:
if a predefined code point or 1-bit indication information in the bit field for the related information of the intra-frequency neighboring cell is received, explicitly learn that the related information of the intra-frequency neighboring cell is not transmitted over the uplink E-DPCCH; or if a non-predefined or non-network-configured value that is transmitted in the E-DPCCH transport format combination indicator bit field is received, implicitly learn that the related information of the intra-frequency neighboring cell is not transmitted over the uplink E-DPCCH; wherein
if there is an intra-frequency neighboring cell whose signal quality or signal strength does not meet a first threshold, or if a base station to which the user equipment belongs has already received the related information of the intra-frequency neighboring cell that meets a first threshold, the base station to which the user equipment belongs does not receive the related information of the intra-frequency neighboring cell.

83. The base station as claimed in claim 81, wherein when the physical control channel is an uplink E-DPCCH and the information about the physical control channel comprises the new data indicator, the new data indicator is 1-bit information.

84. The base station as claimed in claim 78, wherein when the physical control channel is an uplink HS-DPCCH, information about the physical control channel comprises an acknowledgment or a negative acknowledgment, channel quality information and/or precoding control information, and the related information of the intra-frequency neighboring cell; and
a manner in which the information about the physical control channel comprises the related information of the intra-frequency neighboring cell comprises:
performing joint coding on the related information of the intra-frequency neighboring cell and the channel quality information and/or the precoding control information to form new 20-bit information.

85. The base station as claimed in claim 84, wherein the second receiver is configured to:
if a predefined code point in the bit field for the related information of the intra-frequency neighboring cell is received, learn, by using the code point, that the related information of the intra-frequency neighboring cell is not transmitted over the uplink HS-DPCCH; wherein
if there is an intra-frequency neighboring cell whose signal quality or signal strength does not meet a first threshold, or if a base station to which the user equipment belongs has already received the related information of the intra-frequency neighboring cell that meets a first threshold, the base station to which the user equipment belongs does not receive the related information of the intra-frequency neighboring cell.

86. The base station as claimed in claim 74, wherein the scheduling information comprises the related information of the intra-frequency neighboring cell and a highest priority logical channel identifier; and
the second receiver is configured to:
when a highest priority logical channel identifier bit field in the received scheduling information is equal to a predefined or network-configured value, learn, by using one or several bit fields of a total E-DCH buffer status bit field, a highest priority logical channel buffer status bit field, and a UE power headroom bit field that are in the scheduling information, the related information of the intra-frequency neighboring cell.

87. The base station according to any one of claims 74 to 86, further comprising:
configure, by means of predefinition or a network, a repetition period for transmitting the related information of the intra-frequency neighboring cell, receive multiple pieces of same related information of the intra-frequency neighboring cell in the repetition period, and combine the multiple pieces of the same related information of the intra-frequency neighboring cell.
